# EUROPÄISCHE PATENTSCHRIFT

(11) **EP 1 232 226 B1**
(45) Veröffentlichungstag und Bekanntmachung des Hinweises auf die Patenterteilung: **21.06.2006**
(21) Anmeldenummer: 01976022.2
(22) Anmeldetag: 07.09.2001
(51) Int. Cl.: C09K 11/08, G01N 21/91, G01N 21/76, G07D 7/00, C09D 11/00, A61B 5/117

(54) **NANOPARTIKELSYNTHESE**
SYNTHESIS OF NANOPARTICLES
SYNTHESE DE NANOPARTICULES

(30) Priorität: 08.09.2000 WO PCT/DE00/03130
(43) Veröffentlichungstag der Anmeldung: 21.08.2002
(60) Teilanmeldung: 06009332.5
(73) Patentinhaber: Nanosolutions GmbH, 22525 Hamburg (DE)
(72) Erfinder: HAUBOLD, Stephan, 22765 Hamburg (DE); HAASE, Markus, 22457 Hamburg (DE); RIWOTZKY, Carsten, 69117 Heidelberg (DE); WELLER, Horst, 22393 Hamburg (DE); MEYSAMMY, Heike, 20149 Hamburg (DE); IBARRA, Fernando, 20357 Hamburg (DE)
(74) Vertreter: HOFFMANN EITLE
(86) Internationale Anmeldenummer: PCT/DE2001/003433
(87) Internationale Veröffentlichungsnummer: WO 2002/020696

(56) Entgegenhaltungen:
- HAASE M ET AL: "Synthesis and properties of colloidal lanthanide-doped nanocrystals" JOURNAL OF ALLOYS AND COMPOUNDS,CH,ELSEVIER SEQUOIA, LAUSANNE, Bd. 303-304, Mai 2000 (2000-05), Seiten 191-197, XP004204357 ISSN: 0925-8388
- PATENT ABSTRACTS OF JAPAN vol. 2000, no. 07, 29. September 2000 (2000-09-29) & JP 2000 104058 A (SONY CORP), 11. April 2000 (2000-04-11)
- DATABASE WPI Section Ch, Week 200109 Derwent Publications Ltd., London, GB; Class E12, AN 2001-074150 XP002163490 & JP 2000 256251 A (NEW JAPAN CHEM CO LTD) , 19. September 2000 (2000-09-19)
- DATABASE INSPEC [Online] INSTITUTE OF ELECTRICAL ENGINEERS, STEVENAGE, GB; XIE Y ET AL: "Solvothermal route to nanocrystalline CdSe" Database accession no. 6419324 XP002163489 & JOURNAL OF SOLID STATE CHEMISTRY, OCT. 1999, ACADEMIC PRESS, USA, Bd. 147, Nr. 1, Seiten 82-84, ISSN: 0022-4596
- RIWOTZKI K. ET AL J. PHYSICAL CHEMISTRY B Bd. 104, Nr. 13, 10 M{rz 2000, ON WEB,

## Beschreibung

### STAND DER TECHNIK

Die vorliegende Erfindung betrifft Verfahren zur Synthese von Nanopartikeln, insbesondere von Metallsalz Nanopartikeln, wobei die Nanopartikel auch fluoreszenzfähig, sowie dotiert hergestellt werden können.

Metallsalz-Nanopartikeln im Sinne der vorliegenden Erfindung weisen ein Kristallgitter oder im Falle einer Dotierung ein Wirtsgitter auf, dessen Kation ein Metall, insbesondere ein Metall der dritten Nebengruppe des Periodensystems, beispielsweise Lanthan ist, oder ein Seltenerdmetall und dessen Anion, etwa PO₄³⁻, aus einer geeigneten Anionquelle gewonnen wird, beispielsweise einer freien Säure der Salze der jeweils herzustellenden Nanopartikel, etwa Lanthanphosphat-Nanopartikel, gewonnen wird.

Für die Synthese dieser Metallsalz-Nanopartikel ist Stand der Technik die wissenschaftliche Publikation "Wet-Chemical Synthesis of Doped Colloidal Nanomaterials: Particles and Fibres of LaPO4:Eu, LaPO4:Ce, and Lapo4:Ce,Tb",by Messamy H., Riwotzki K., Kornowski A., Naused S., and Haase M:, in Advanced Materials, 1999, 11, No.10, S. 840ff., herausgegeben am 5. Juli 1999. Durch eine naßchemische Synthese der Ausgangsstoffe in Wasser (Hydrothermalsynthese) können undotierte oder dotierte Nanopartikel insbesondere der oben genannten Metallsalz-Nanopartikel kolloidal in Wasser erzeugt werden. Mit weiteren Verfahrensschritten des Ausfällens und nachfolgenden Zentrifugierens kann eine Trockensubstanz als Konzentrat hergestellt werden.

Die Hydrothermalsynthese im oben genannten Verfahren resultiert allerdings grundsätzlich in einer relativ breiten Partikelgrößenverteilung und damit schlechten Ausbeute an Partikeln einer bestimmten (gewünschten) Größe. Im oben genannten Verfahren liegt beispielsweise der Anteil von Partikeln mit Durchmessern unter 25 nm bei etwa 20% verwertbarer Teilchen, gemessen an der Gesamtmenge der durch das Verfahren gewonnenen, kristallinen Substanz. Desweiteren ist die Verwendung eines Autoklaven wegen der hohen Drücke durch die Verwendung von Wasser als Synthesemedium zumindest für eine industrielle Fertigung der Zielsubstanz als nachteilig anzusehen. Daher wäre es wünschenswert, die Ausbeute zu erhöhen, und die Synthese labortechnisch bzw. produktionstechnisch zu vereinfachen.

Haase M. et al: "Synthesis and properties of colloidal lanthanide-doped nanocrystals"; Journal of alloys and compounds, vol. 303.304, May 2000, pages 191-197 vergleichen die Hydrothermalsynthese und die Synthese in organischer Phase von Lanthan-dotierten Nanokristallen. Auf der Seite 192 enthält Haase et al. eine kurze Beschreibung der Synthese in einem organischen Medium, unter Verweis auf K. Riwotzki et al., J. Phys. Chem B 2000, 104, 2824-2828, "Liquid-phase synthesis of doped nanoparticles: Colloids of luminescing LaPO₄:Eu and CePO₄:Eu particles with a narrower particle size distribution". Dieses Dokument beschreibt die Synthese von dotierten Lanthan- und Cerphosphaten in einer organischen wachstumssteuernden Komponente. Für die Synthese von LaPO₄:Eu ist beispielsweise die Umsetzung von H₃PO₄, La(NO₃)₃ und EuCl₃ (als Hydrat) in Tris(ethylhexyl)phosphat unter Einsatz von Trioctylamin als Base bei einer Temperatur von 200°C und einer Reaktionsdauer von 16 Stunden angegeben. Laut Riwotzki et. al wurden die CePO₄:Tb-Nanoteilchen durch Umsetzung von Ce(NO₃)₃ und Tb(NO₃)₃ mit H₃PO4 in Tris(ethylhexyl)phosphat und Trioctylamin hergestellt. Es wird ferner erwähnt, dass anstatt wasserhaltiger Metallchloride auch wasserfreie Metallchloride verwenden kann und das Lösungsmittel Tris(ethylhexyl)phosphat durch Tributylphosphat ersetzt werden kann.

JP 2000 104058 A betrifft dotierte Zinksulfid-Halbleiter. Die dort beschriebenen Mangan-dotierten Zinksulfid-Nanokristalle werden in einer Flüssigphasenreaktion, zusammen mit einem Polymer auf Acrylsäure- oder Methacrylsäurebasis, oder Polysterol, gefällt.

Xie Y et al: "Solvothermal route to nanocrystalline CdSe" & Journal of solid state chemistry, Oct. 1999, Academic Press, USA, vol. 147, no. 1, pages 82-84, betrifft die Synthese von nanokristallinem Cadmiumselenid aus elementarem Cd und S in Ethylendiamin.

Allerdings wäre eine vereinfachte und effizientere Herstellung nicht nur für die o.g. Lanthanphosphat-Nanopartikel gewünscht, sondern - angesichts der immer mehr zunehmenden Anwendungsmöglichkeiten für Nanopartikel - für eine grosse Gruppe von Nanopartikeln, bei denen das Kristallgitter oder Wirtsgitter insbesondere Verbindungen aus der Gruppe der Phosphate, Halophosphate, Arsenate, Sulfate, Borate, Aluminate, Gallate, Silikate, Germanate, Oxide, Vanadate, Niobate, Tantalate, Wolframate, Molybdate, Alkalihalogenate, andere Halogenide, Nitride, Sulfide, Selenide, Sulfoselenide, sowie Oxysulfide enthalten kann.

Bezüglich der speziellen Aspekte der Dotierung von Nanopartikeln und der Fluoreszenzfähigkeit der Nanopartikel zeigt die oben genannte Veröffentlichung vom 5.Juli 1999 einen Weg zur Herstellung anorganischer Fluoreszenzfarbstoffe auf, die sehr viel langzeitstabiler sind, als herkömmliche organische Fluoreszenzfarbstoffe. Die im Titel der Publikation genannten Nano-Phosphatteilchen werden gezielt mit Lanthanid-Ionen dotiert, die den Teilchen fluoreszierende Eigenschaften verleihen.

Damit ist zwar eine Substanz bekannt, bei der die positive Eigenschaft der Langlebigkeit des Farbstoffes aufgrund dessen anorganischer Natur ausgenutzt wird, jedoch unter Inkaufnahme der oben genannten Nachteile der Hydrothermalsynthese, nämlich insbesondere hoher Druck und geringe Ausbeute.

Im weiteren, folgend zitierten Stand der Technik werden fluoreszierende Farbstoffe beispielsweise zur Kennzeichnung von Schecks, wie es in der US Patentschrift No. 3,886,083 beschrieben ist, als Sicherheitstinten, wie es in der chinesischen Patentschrift CN 1,193,640 offenbart ist, zur Detektion von Rissen in Oberflächen, wie es in der US Patentschrift No. 4,331,871 beschrieben ist, zur Detektion von Fingerabdrücken, siehe US Patent No. 4,700,657, weiter als Markierungen von klaren Kunststoffteilen wie Brillengläsern und Kontaktlinsen und anderen Produkten, siehe die US Patente, Nos. US 4,238,524, und US 5,418,855, sowie im Bereich der Leckprüfung eingesetzt, siehe WO 9 820 365.

In diesen Veröffentlichungen dienen allerdings organische Substanzen als Fluoreszenzfarbstoffe.

Nachteile der beschriebenen organischen, Farbstoffe sind ihre unzulängliche Stabilität und ihre daraus folgende Ausbleichung, der häufig geringe Abstand zwischen anregendem und emittiertem Licht, was Probleme bei der Unterscheidung des Emissionslichtes vom Anregungslicht schafft, des weiteren die Farbigkeit der verwendeten Farbstoffe unter Normallicht, was sich entweder störend auf das Design des fluoreszierenden Produktes oder die Sicherheit der Markierung auswirkt, mangelnde chemische Stabilität gegenüber äußeren Einflüssen, was den Einsatzbereich der Farbstoffe beschränkt, und häufig mangelnde Transparenz der Farbstoffe im Zusammenhang mit klaren Kunststoffen, Fenstern und Sicherheitsmarkierungen auf jeglichen Gegenständen die einem hohen Sicherheitsanspruch gerecht werden müssen. Beispielsweise seien Scheckkarten, Kreditkarten, Kundenkarten, Fahrzeugmarkierungen, Markierung von Wertgegenständen, wie Schmuck, Kunstgegenstände genannt, darüber hinaus solche Produkte, die eine eindeutige Herstelleridentifikation ermöglichen sollen, ohne äußerlich für den Kunden oder einen potentiellen Fälscher erkenntlich zu sein.

Auch Nanopartikel werden als mögliche Träger für fluoreszierende Farbstoffe verwendet, als es z.B. durch die Offenbarung der WO 9937814 erkannt wurde, dass es nachteilig ist, die fluoreszierenden Farbstoffe nur durch eine Bindung an die Oberfläche des jeweiligen Trägermaterials zu binden. Die wichtigen Farbstoffe sind dadurch anfällig gegenüber Umwelteinflüssen und können z.B. durch chemische Reaktionen, wie Oxidation, und Reduktion leicht in ihrer Wirkung geschwächt werden. Gerade dies soll aber prinzipiell vermieden werden, da eine Langzeitstabilität der Fluoreszenz in den meisten Anwendungsfällen erforderlich ist.

In der oben erwähnten WO 9937814 ist ein Weg zur Herstellung sogar mehrfarbiger Fluoreszenz beschrieben. Es werden zunächst polymere Mikropartikel hergestellt, die polymere Nanopartikel tragen, die ihrerseits mit fluoreszierenden organischen Farbstoffen aus der allgemein als Cyaninfarbstoffe bekannten Klasse getränkt sind. Es werden also gefärbte Nanopartikel in poröse Mikropartikel inkorporiert. Mehrere Farbstoffe können gleichzeitig verwendet werden, um unterschiedliche Farben bei der Fluoreszenzemission der Mikropartikel zu erzeugen. Die Mikropartikel und Nanopartikel weisen bevorzugt durch zusätzliche Funktionsgruppen an der jeweiligen Oberfläche eine nicht-glatte Oberfläche auf, um die Bindungen zu erleichtern. Dadurch entstehen Träger mit großer Oberfläche, um viele Nanopartikel bzw. Farbstoffe an der Peripherie der Mikropartikel und zum Teil in deren geringfügig weiter innen liegenden Bereichen anlagern zu können.

Ein Nachteil an diesem Verfahren ist jedoch, dass hier organische Fluoreszenzmaterialien verwendet werden, die trotz der zumindest teilweisen Inkorporierung in Mikropartikel der vorerwähnten verfrühten Altersabnutzung unterliegen und damit schlechte Langzeitstabilität zeigen.

Ein grundsätzlicher Nachteil bei der Verwendung organischer Farbstoffe ist, dass sie durch nicht-angepaßte, zu starke Anregung zerstört werden können und ihre Farbwirkung verlieren.

Ein weiterer Nachteil besteht darin, dass solche Stoffe das Phänomen der sogenannten Konzentrationslöschung ("concentration quenching") zeigen, d.h., liegen die fluoreszierenden Teilchen zu konzentriert vor, beispielsweise in Pulverform, so re-absorbieren die fluoreszierenden Partikel grosse Teile der oder sämtliche emittierte Fluoreszenzstrahlung wieder. Ein organischer Fluoreszenzfarbstoff in Pulverform leuchtet daher schlecht. Diese Eigenschaft ist sehr nachteilhaft, da die maximal erreichbare Fluoreszenzintensität durch Konzentrationslöschung beschränkt ist.

Ein weiterer Nachteil besteht darin, daß diese organischen Fluoreszenzfarbstoffe nicht in geeigneter Weise, das heißt vor allem nicht flexibel genug für die speziellen Erfordernisse vieler Anwendungsfälle zur Markierung von Gegenständen verwendet werden können.

### AUFGABE DER ERFINDUNG

Daher besteht die Aufgabe der Erfindung darin, unter Vermeidung der Nachteile der Hydrothermalsynthese eine organische Synthese von Nanopartikeln für die eingangs genannten Stoffgruppen zu ermöglichen.

### ZUSAMMENFASSUNG UND VORTEILE DER ERFINDUNG

Im folgenden sei auf die Ansprüche Bezug genommen.

Das erfindungsgemäße Verfahren mit den Merkmalen des Anspruchs 1 weist gegenüber dem Verfahren, wie es in der eingangs genannten Veröffentlichung beschrieben ist, den Vorteil auf, daß eine wesentlich bessere Ausbeute erzielt werden kann. Der Grund liegt in einer wesentlich engeren Größenverteilung der hergestellten Nanopartikel, was eine nachträgliche größenselektive Trennung überflüssig macht.

Desweiteren wird eine Lehre synoptischer Natur offenbart, durch deren universellen Lösungsansatz die individuellen Syntheseschwierigkeiten von einzelnen, gewünschten Nanopartikel-Stoffgruppen jeweils mit speziellen, aus der synoptischen Lehre sofort erkennbaren, erfindungsgemässen Lösungsansätzen überwunden werden können.

Diese Lehre der Erfindung ist unabhängig davon, ob dotierte oder nicht-dotierte Nanopartikel hergestellt werden sollen. Sofern Ausführungsbeipiele für die Synthese von dotierten Nanopartikeln gegeben werden, sollte verstanden werden, dass die Herstellungsvorschrift für entsprechende nicht-dotierte Nanopartikel im wesentlichen durch Ersatz des für die Dotierung erforderlichen Ausgangsstoffes durch eine entsprechende Menge des Ausgangsstoffes für das Wirtsgittermaterial gewonnen werden kann. Weiter wird der Begriff der Dotierung hierin sehr umfassend verwendet, so dass er nicht durch einen bestimmten maximalen Prozentsatz der Gitterplätze für den Dotanden, eingeschränkt wird. Er umfasst also auch beispielsweise Mischphosphatnanopartikel, oder andere, die etwa paritätische Anteile zweier oder mehrerer Kationen aufweisen.

Gemäß dem allgemeinsten Aspekt der Erfindung wird ein Verfahren offenbart zur Synthese von Metallsalz-Nanopartikeln mit einem Kristallgitter oder Wirtsgitter, dessen Kation, z.B. La³⁺, aus einer Kationquelle gewinnbar z.B. LaCl₃ ist, und dessen Anion aus einer als Anionquelle dienenden Stoffklasse gewinnbar ist, wobei das Wirtsmaterial Verbindungen aus der Gruppe der Phosphate, Halophosphate, Arsenate, Sulfate, Borate, Silikate, Aluminate, Gallate, Germanate, Oxide, Vanadate, Niobate, Tantalate, Wolframate, Molybdate, Alkalihalogenate, andere. Halogenide, Nitride, Sulfide, Selenide, Sulfoselenide, sowie Oxysulfide enthalten kann, gekennzeichnet durch die Schritte:
a) das Herstellen einer Synthesemischung, die zumindest umfasst:
   aa) als ein organisches Lösungsmittel eine das Kristallwachstum der Nanopartikel steuernde Komponente, die unter phosphororganischen Verbindungen und Aminen ausgewählt wird, und als weitere Komponente eine Etherverbindung oder eine über der Synthesemindesttemperatur siedende Alkanverbindung,
   bb) eine in der Synthesemischung lösliche oder zumindest darin dispergierbare Kationenquelle, die unter Metallchloriden, Metallbromiden, Metalliodiden, Metallalkoxiden, Metallacetaten und Metallacetylacetonaten ausgewählt wird, und
   cc) eine in der Synthesemischung lösliche oder zumindest darin dispergierbare Quelle für die besagten Anionen, die ausgewählt wird unter:
      aaa) freie Säuren der Salze der jeweils herzustellenden Metallsalz-Nanopartikel, z.B. Phosphorsäure,
      bbb) in der Synthesemischung lösliche oder zumindest dispergierbare Salze, beispielsweise solche mit organischem Kation oder Metallsalze, bei letzterem vorzugsweise Alkalimetallsalze, oder
      ccc) organische Verbindungen, die ab einer erhöhten Synthesemindesttemperatur das Anion freisetzen,
   wobei je nach Wahl des Salzes der herzustellenden Nanopartikel ein geeigneter, anionspendender Stoff aus der Stoffklasse gewählt wird, und
b) Halten der Mischung über einer vorgegebenen Synthesemindesttemperatur während einer zu der Temperatur passenden Synthesezeitspanne, vorzugsweise unter Vermeidung von Absetzvorgängen in der Mischung.

Es wird daher gemäß dem allgemeinsten, herstellungstechnischen Aspekt der vorliegenden Erfindung ein breit anwendbarer Lösungsansatz offenbart, der die Synthese verschiedenartigster Metallsalz-Nanopartikel ermöglicht, und der sogar die Synthese von bestimmten Halbleiter-Nanopartikeln erstmals ermöglicht.

Zudem sind fluoreszierende Nanopartikel mit sehr geringer Größe von wenigen Manometern Ausmaß erzeugbar, was ihre homogene Einbindung in feinste Folien, feinste Beschichtungen, eine gute Auflösung in Flüssigkeiten ohne das für größere Partikelgrößen typische Absetzen gewisser Anteile am Boden der Flüssigkeit, oder die homogene Durchmischung mit feinsten Stäuben ermöglicht, ohne daß eine Materialveränderung bezüglich des jeweiligen Trägerstoffes fühlbar wird.

Schließlich ist das Herstellungsverfahren für viele der beanspruchten erfindungsgemäßen Substanzen wesentlich weniger riskant, da es ohne Überdruck und ohne Einsatz eines Autoklaven durchgeführt werden kann.

In bevorzugter Weise kann das grundlegende Syntheseverfahren verwendet werden
a) zur Herstellung von Nanopartikeln mit Phosphor enthaltenden Anionen Phosphorsäure als Anionquelle verwendet wird, wobei zur Herstellung von Nanopartikeln mit Bor enthaltenden Anionen Borsäure als Anionquelle verwendet wird, wobei zur Herstellung von Nanopartikeln mit Fluor enthaltenden Anionen Flusssäure als Anionquelle verwendet wird, wobei
b) im Falle einer Verwendung eines Salzes aus der Anionenstoffklasse mit organischem Kation ein Salz mit einem Trialkylammonium- oder Tetraalkylammonium-Kation verwendet wird. Beispielsweise wird zur Herstellung von Nanopartikeln mit Phosphat enthaltenden Anionen Tetrabutylammoniumdihydrogenphosphat, Tetramethylammonium-dihydrogenphosphat oder Triethylammonium-dihydrogenphosphat, zur Herstellung von Nanopartikeln mit Sulfat enthaltenen Anionen Tetrabutylammonium-hydrogensulfat, Tetramethylammoniumhydrogensulfat, Bis-Tetrabutylammoniumsulfat oder Triethylammonium-hydrogensulfat, zur Herstellung von Nanopartikeln mit Fluorid enthaltenen Anionen Triethylamin-trishydrofluorid, Pyridinhydrofluorid oder Collidinhydrofluorid, zur Herstellung von Nanopartikeln mit Sulfid enthaltenen Anionen Collidinhydrosulfid als Anionquelle verwendet. Im Falle der Verwendung eines in der Synthesemischung schwer löslichen Salzes aus der Anionenstoffklasse wird bevorzugt ein Komplexbildner für die Metallkomponente des Metallsalzes zur leichteren Löslichkeit dessen zur Synthesemischung zugegeben, für Alkalimetallsalze bevorzugt ein Kronenether.

Im Falle einer Verwendung einer, bei erhöhter Temperatur zersetzlichen und anionspendenden, organischen Verbindung kann bevorzugt ein vorbestimmter Ester einer dem jeweilig gewählten Anion entsprechenden Säure eingesetzt werden. Es eignet sich ein Ester eines Alkohols, der bei erhöhter Temperatur (also unter den Synthesebedingungen) zur Eliminierung neigt und somit Wasser abspaltet. Beispiele für solche Alkohole sind 2-Methyl-2-propanol, 2-Butanol und 2-Methyl-2-butanol.
Für Phosphate kann ein Phosphorsäureester, für Silikate ein Kieselsäureester, für Borate ein Borsäureester, für Sulfate ein Schwefelsäureester, für Vanadate ein Vandinsäureester, für Wolframate ein Wolframsäureester verwendet werden.

Für Halophosphate kann beispielsweise ein Gemisch aus Triethylammonium-dihydrogenphosphat und Triethylamintrihydrofluorid eingesetzt werden, was beides käuflich erworben werden kann.

Leicht zersetzliche Alkoxide können in entsprechender Weise bevorzugt bei Niobaten, Tantalaten, Aluminaten, Gallaten, Arsenaten und Germanaten als anionspendender Stoff verwendet werden.

Für Sulfide kann neben den Metallsalzen auch Bistrimethylsilylsulfid als anionspendender Stoff, für Selenide in entsprechender Weise Bis- trimethylsilylselenid, und für Sulfoselenide eine entsprechende Mischung aus den vorgenannten Substanzen eingesetzt werden.

Als phosphororganische Verbindung für die Wachstumssteuerkomponente kann bevorzugt wenigstens eines von
a) Phosphinsäureester ((R₁-)(R₂-)(R₃-O-)P=O),
b) Phosphonsäurediester, ((R₁-)(R₂-O-)(R₃-O-)P=O),
c) Phosphorsäuretriester, (Trialkylphosphate) ((R₁-O-)(R₂₋O-)(R₃-O-)P=O),
d) Trialkylphosphane, ((R₁-O-)(R₂-O-)(R₃-O-)P), insbesondere Trioctylphosphan (TOP),
e) Trialkylphosphanoxide, ((R₁-)(R₂-)(R₃-)P=O), insbesondere Trioctylphosphanoxid (TOPO), im Lösungsmittel enthalten sein.

Angegeben sind oben nur Pseudostrukturformeln. Die einzelnen Sauerstoff (0) Atome sind dabei sämtlich an das Phosphoratom (P) gebunden. R1, R2, R3 sind dabei zunächst verzweigte oder unverzweigte Alkanketten mit mindestens einem Kohlenstoffatom oder Phenyl-, Toloyl-Xylyl-, oder Benzylgruppen.

Besonders die unter a) bis c) genannten Ester bilden, vermutlich über das durch eine Doppelbindung an den Phosphor gebundene Sauerstoffatom, eine Bindung besonders geeigneter Stärke zu vielen Metallausgangsverbindungen aus, die in vorteilhafter Weise bei der Synthese ausgenutzt werden kann. Damit lassen sich besondere Nanopartikel besonderer Stoffgruppen synthetisieren.

Insbesondere zeigen die Metallsalz-Partikel bei Verwendung der unter a) bis c) genannten Ester eine noch bessere Löslichkeit, noch bessere Dispergierbarkeit und noch geringere Tendenz zur Bildung von Agglomeraten als bei Verwendung der anderen wachstumskontrollierenden Substanzen.

Dieses Phänomen beruht wahrscheinlich auf einer teilweisen Zersetzung der Ester in einem späten Stadium der Synthese, zu dem bereits praktisch die gesamte Menge an Metallausgangsverbindung und anionenspendender Ausgangssubstanz zu Metallsalz-Nanopartikeln abreagiert hat. Die teilweise Zersetzung der Ester setzt dabei offenbar Produkte frei, die reaktiv an die Oberfläche der bereits gebildeten Partikel ankoppeln und dadurch zu deren oben genannten, nochmals verbesserten Eigenschaften führen.

Wahrscheinlich werden bei diesem langsamen Zersetzungsprozess Alkoholgruppen von den unter a) bis c) genannten Estern abgespalten. Neben Alkohol entsteht dabei als weiteres Zersetzungsprodukt Phosphinsäure bei Verwendung eines Phosphinsäureesters, Phosphonsäure und Phosphonsäuremonoester bei Verwendung eines Phosphonsäurediesters, bzw. Phosphorsäure-monoester und -diester bei Verwendung eines Phosphorsäuretriesters.

Alle diese Zersetzungsprodukte (außer den Alkoholen) enthalten saure P-OH-Gruppen, von denen bekannt ist, daß sie sehr feste Bindungen mit Metallionen eingehen können. Die Ankopplung dieser Zersetzungsprodukte an die Nanopartikel geschieht also möglicherweise durch Bindung an die Metallionen der Partikeloberfläche.
Darüberhinaus ist auch eine reaktive Ankopplung des durch die Zersetzung freigesetzten Alkohols an die Partikel denkbar. Beispielsweise kann bei phosphathaltigen Nanopartikeln (wie Lanthanphosphat) der Alkohol an eine Phosphatgruppe der Partikeloberfläche unter Bildung einer Esterbindung angekoppelt werden.

Erwähnt sei schließlich noch, daß wir eine analoge Zersetzung von Estern unter Abspaltung der Alkoholgruppen auch bei den oben als Anionenquelle genannten Estern ausnutzen. Allerdings werden für diesen Zweck Ester gewählt, die thermisch instabil sind, d.h. bei denen sämtliche Alkoholgruppen bereits in den ersten Synthesestadien schnell und vollständig abgespalten werden. Die in diesem Fall vollständige Abspaltung aller Alkoholgruppen führt zum Anion, welches anschließend mit der Metallausgangsverbindung reagiert.

Auch Mischungen der phosphororganischen Verbindungen können verwendet werden, um die Synthese flexibel zur Synthese von Nanopartikeln aus verschiedenen Stoffgrupen zu realisieren.

Eine weitere flexible Anpassung der Synthese an die verschiedenen Stoffklassen kann erreicht werden durch den Einsatz einer Mischung bestehend aus mindestens einer der oben genannten wachstumsregulierenden Substanzen und einem oder mehreren Lösungsmitteln ausgewählt unter Ether - und Alkan verbindungen, wobei die metallkomplexierenden Eigenschaften dieser Lösungsmittel geringer sind als die der wachstumsregulierenden Komponenten. Bevorzugt sind solche Lösungsmittel, die in der Lage sind, Kristallwasser von Metallausgangsverbindungen zumindest teilweise freizusetzen. Der Einsatz einer solcher Mischung-kann auch aus einem anderen Grund vorteilhaft sein, wie im folgenden diskutiert:
Zum Beispiel werden gemäß einem Einzelaspekt der vorliegenden Erfindung werden Trialkylphosphate und Trialkylphosphane als koordinierende Lösungsmittel eingesetzt. Dies impliziert die Verwendung relativ großer Mengen dieser Substanzen; Beispielsweise werden danach für die Synthese von LaPO₄:Ce,Tb Nanopartikeln 6 Liter Tris-ethylhexylphosphat pro 1 Mol Metallionen (Ce, Tb und La zusammen) eingesetzt, beispielsweise:
300 ml Tris-ethylhexylphosphat + 20 mmol Cerchlorid + 22,5 mmol Lanthanchlorid + 7,5 mmol Terbiumchlorid. Dies entspricht einen Molverhältnis Tris-Ethylhexylphosphat zu Metall von etwa 13 : 1. Abhängig von der Wahl des Trialkylphosphates bzw. Trialkylphosphanes, insbesondere von der Länge des Alkylrestes oder der Art der funktionellen Gruppen an den Alkylresten kann die Verwendung so großer Mengen ungünstig sein;

Dies ist z. B dann der Fall, wenn das Ausfällen der Nanopartikel nur unvollständig oder nur unter Einsatz sehr großer Lösungsmittelmengen gelingt oder wenn die Substanzen sehr teuer oder aufwendig zu synthetisieren sind, was insbesondere bei funktionalisierten Trialkylphosphaten und - phosphanen vorkommt.

Wenn daher in erfindungsgemäss besonders bevorzugter Weise ein Trialkylphosphat oder ein Trialkylphosphan als Steuerkomponente bei der Bildung der Nanopartikel verwendet wird, und dabei pro Mol Metallionen weniger als 10 Mol, bevorzugt 0,9 bis 5 Mol, und besonders bevorzugt 0,95 bis 1,5 Mol an Steuer komponente verwendet wird, so kann die Synthese vereinfacht und verbilligt werden, da geringere Quantitäten der Wachstumssteuerkomponenten eingesetzt werden. Diese Bereich gelten universell für alle offenbarten Substanzklassen von Nanopartikeln.

In diesen Fällen können Lösungsmittelgemische eingesetzt werden, die also nur einen relativ kleinen Anteil an Trialkylphosphat bzw. Trialkylphosphan enthalten; die untere Grenze liegt dabei bei etwas unterhalb einem Mol Trialkylphosphat bzw. Trialkylphosphan pro Mol Metallionen (also 1:1 nach obiger Nomenklatur).

Erfindungsgemäß werden die weiteren Komponenten des Lösungsmittelgemisches, d.h. die Ether - oder Alkan verbindung, dabei bevorzugt so gewählt, daß der Siedepunkt des Gemisches bei einer Temperatur liegt, die für Bildung der Nanokristalle ausreichend hoch ist, hier als Synthesemindesttemperatur bezeichnet. Die Menge der weiteren Komponenten ist dabei so hoch, daß das Synthesegemisch die bei der Synthesereaktion gebildeten Nanopartikel in Lösung zu halten vermag.
Bevorzugt sind dabei solche Komponenten, die sich während der Reaktionsdauer möglichst wenig zersetzen.
Besonders bevorzugt sind Komponenten, die sich nach Reaktionsende unter verminderten Druck unzersetzt abdestillieren lassen, und zwar mittels einfacher, laborüblicher Methoden, wie etwa Ölpumpenvakuum, nicht besser als 0,01 mbar; Wasser- oder Ölbad, d.h. einer Destillationstemperatur nicht über 200 °C, entsprechend etwa ca. 480 Kelvin.

Die weitere, vorzugsweise metallkomplexierende, Komponente der Synthesemischung, die vorzugsweise in Metallsalzausgangsverbindungen vorhandenes Kristallwasser verdrängt, ist eine
a) Etherverbindung, bevorzugt Dipentylether, Dihexylether, Diheptylether, Dioctylether, Dibenzylether, Diisoamylether, Ethylenglykoldibutylether, Diethylenglykoldibutylether, oder Diphenylether, oder / und
b) eine über der Synthesemindesttemperatur siedenden Alkanverbindung, bevorzugt Dodekan oder Hexadekan, (nicht metallkomplexierend), beispielsweise zur Verdünnung der Reaktionsmiachung. Ferner kann eine Aminverbindung, bevorzugt Dihexylamin, Bis-(2-ethylhexyl)amin, Trioctylamin, Tris-(2-ethylhexyl)amin, zugegeben werden.

Wenn in weiter vorteilhafter Weise R1, R2, oder R3 verzweigte oder unverzweigte Alkanketten sind, die wenigstens eine Carboxylgruppe (-COOH), Carbonsäureestergruppe (-COOR), Aminogruppen (-NH₂) und (-NHR), Hydroxylgruppe (-OH), Cyanogruppe (-CN), Mercaptogruppe (-SH), Brom (-Br) und Chlor (-Cl) oder Kombinationen aus diesen Gruppen tragen, so können die Wachstumssteuerkomponenten sehr flexibel funktionalisiert werden. Daher können Nanopartikel vieler verschiedener Stoffklassen, (Phosphate, Halophosphate, Arsenate,...) wie eingangs erwähnt, gezielt synthetisiert werden. Dennoch bleibt die Synthese relativ preisgünstig, da relativ geringe Mengen an teuren Steuerkomponenten verwendet werden mügsen.

Als Kationquelle kann bevorzugt ein Chlorid, etwa LaCl₃, für Lanthanphosphatnanopartikel, oder Bromide, Iodide, Alkoxide, oder Acetylacetonat als Ausgangsstoff verwendet werden.

In weiterer, bevorzugter Ausbildung des erfindungsgemässen Syntheseverfahrens kann es über die Grundschritte (siehe oben) hinaus die folgenden zusätzlichen Schritte enthalten:
a) Herstellen einer ersten Lösung des Kationausgangsstoffes in einem - vorzugsweise niederen - Alkohol, insbesondere Methanol, wobei vorzugsweise ein Metallsalz verwendet wird, das nichtoxidierend und in der Synthesemischung löslich ist, und
b) Mischen der ersten Lösung mit dem bereits vorhanden Lösungsmittel, das wenigstens eine das Kristallwachstum der Nanopartikel steuernde, beispielsweise eine phosphororganische Verbindung enthaltende Komponente aufweist, zur Herstellung der metallkomplexierenden Synthesemischung,
c) Erhitzthalten der Synthesemischung unter Inertgas, insbesondere unter Stickstoff, wobei der Alkohol in bevorzugter Weise vor oder während der Synthese abdestilliert wird.

Wenn die Nanopartikel nach Ablauf der Synthesereaktion isoliert werden sollen, enthält das erfindungsgemässe Verfahren noch weitere optionale Nachbehandlungsschritte:
a) Abdestillieren einer oder mehrerer Lösungsmittelkomponenten der Synthesemischung, bevorzugt unter Vakuum, bevorzugt erst nach Ende der Synthesezeitspanne, oder /und
b) Reinigen der Nanopartikel von anhaftenden Nebenprodukten durch Abwaschen mit einem Alkohol, bevorzugt Ethanol, oder durch Diafiltration.

Das erfindungsgemässe Verfahren kann in allen Variationen je nach Säuregehalt der Synthesemischung und Art der eingesetzten Ausgangsstoffe den weiteren Schritt enthalten, die Synthesemischung mit einer in der Synthesemischung löslichen Base, bevorzugt Trihexylamin, Triheptylamin, Trioctylamin, oder Tris-(2-ethylhexyl)amin zu je nach Bedarf mehr oder weniger zu neutralisieren.

In bevorzugter Weise können als Ausgangsstoff hydratisierte Metallsalze verwendet werden, da diese oft besser löslich sind. Die Freisetzung kleiner Mengen Wasser während der Reaktion beschleunigt zudem die Zersetzung bestimmter anionenspendener Ausgangsverbindungen, wie Alkoxide und Ester, und erhöht damit die Reaktionsgeschwindigkeit.

Desweiteren können bei der Herstellung von dotierten Nanopartikeln auch mehrere unterschiedliche Metallsalze verwendet werden, wobei wenigstens ein Metall davon als Dotierungsmaterial für die herzustellenden Nanopartikel verwendet wird.

Das erfindungsgemässe Spektrum an Synthesevariationen ermöglicht ein sehr breites Einsatzgebiet, je nach Wahl der Ausgangsstoffe, und der weiteren Komponenten der Synthesemischung. Es eignet sich auch für die Synthese von Halbleiter-Nanopartikeln, insbesondere von III-V- oder von II-VI- Halbleitern.

Durch gezielten Einsatz der erfindungsgemässen Lösungsmittelkomponenten - etwa der Trialkylphosphate als Steuerkomponente für das Wachstum können nun erstmals Nanopartikel der folgenden Stoffgruppen erstmals in im Vergleich zur Hydrothermalsynthese enger Grössenverteilung mit niedrigen Maximalgröße und gleichzeitig hoher Ausbeute ohne nachträgliche Größenselektion hergestellt werden:

Dies sind die Phosphate der Seltenerdmetalle, der III. Nebengruppe und von Calcium (Ca), Strontium (Sr), Barium (Ba), mit einer oberen Teilchengrößengrenze von etwa 15 nm, vorzugsweise von 10 nm. Die Nanopartikel können so eng verteilt und mit solch geringen Grössen nur dank ihrer sehr geringen Neigung zur Agglomeration, d.h., Verwachsung der Partikel untereinander, hergestellt werden, eine vorteilhafte Wirkung, die durch den Einsatz beipielsweise der oben genannten Trialkylphosphate bei der Synthese ermöglicht wird.

Der nächste Abschnitt betrifft das Syntheseverfahren für und Anwendung von fluoreszenzfähigen Nanopartikeln und Aspekte der Dotierung im Besonderen.

Der aus dem Syntheseverfahren hervorgegangene Nanopartikelstoff kann fluoreszenzfähige Partikel enthalten, die im wesentlichen nicht 'altern', also langanhaltende Leuchteigenschaften besitzen, hitzebeständiger und resistenter gegen andere Umwelteinflüsse sind, als die auf organischen Fluoreszenzfarbstoffen beruhenden Substanzen.

Dies wird im wesentlichen durch die diesem Aspekt zugrundeliegende Idee erreicht, ein eigenes vollständiges, anorganisches Nanopartikel herzustellen, das nach passender energetischer Anregung durch passende Art von Energiezufuhr, insbesondere durch elektromagnetische Strahlen entsprechender Frequenz beispielsweise aus dem Infrarot- (IR), dem visuellen (VIS) oder dem ultravioletten (UV) Bereich, oder durch Röntgenstrahlung bzw. gegebenenfalls durch Materie- oder Elektronenstrahlen von sich aus leuchtet. Eingebunden in ein stabiles Wirtsmaterial, beispielsweise ein Wirtsgitter sind die Leuchteigenschaften äußerst stabil, selbst gegenüber erschwerten physikalischen Umgebungsparametern, wie etwa erhöhtem Druck, Temperatur, oder deren Schwankungszyklen, sowie gegenüber fluoroszenzfeindlichem, chemischen Milieu, gegenüber Photooxidation, saurer oder basischer Umgebung, organischen Lösungsmitteln, etc.

Dieser zentrale, aus der anorganischen Natur der Nanopartikel gewonnene Vorteil der erfindungsgemäßen Substanzen gegenüber handelsüblichen, organischen Fluoreszenzfarben und Fluoreszenzmarkern macht diese auch an exponierten Stellen in vielen Bereichen einsatzfähig.

Erfindungsgemäß ausgestaltbar sind hierin zumindest folgende Gegenstände:

Ein Herstellungsverfahren für Nanopartikel der in Anspruch 1 definierten Stoffgruppen, insbesondere für anorganisch dotierte Nanopartikel, und das unmittelbar daraus hergestellte Verfahrenserzeugnis;
die danach erhältlichen Nanopartikel, gleich in welcher physikalischen Form vorliegend, etwa als Pulverkonzentrat, Kolloid, oder Aerosol;
ein Nanopartikelträgerstoff - im folgenden auch als NPTS abgekürzt -, der erfindungsgemäße Nanopartikel trägt, etwa in räumlich homogener oder inhomogener Verteilung, so daß eine Inkorporierung in den Trägerstoff im Sinne einer Einbettung, oder mehr eine Beschichtung mit diesem realisiert wird;

Gegenstände, die mit dem Trägerstoff und/ oder den dotierten Nanopartikeln bewußt versehen sind, beispielsweise zum Zwecke einer besonderen Markierung; und
verschiedene Verwendungen und Anwendungsmöglichkeiten für die erfindungsgemäßen Stoffe und generell für Nanopartikel aus der Familie der Phosphore, für dotierte Nanopartikel.

Erfindungsgemäß werden die fluoreszenzfähigen, anorganischen Nanopartikel in einer Flüssigphasensynthese mit einem organischen Lösungsmittel hergestellt, um zunächst kolloide Lösungen hochkristalliner Nanopartikel herzustellen. Diese in Lösung befindlichen Nanopartikel können in weiteren Verfahrensschritten dann ausgefällt und getrocknet werden. Je nach verwendetem Lösungsmittel, verwendeter Kationenquelle oder Anionenquelle für das Wirtsgitter und gegebenenfalls einer oder mehrerer weiterer Kationenquellen (bevorzugt Metallsalze) für das Dotierungsmaterial ergeben sich dann gewünschte Nanopartikel, und besondere Eigenschaften der Nanopartikel.

Gemäß einem weiteren Aspekt der vorliegenden Erfindung wird ein Herstellungsverfahren für fluoreszenzfähige, anorganisch dotierte Nanopartikel offenbart, wobei die Nanopartikel im Endprodukt in einem Wirtsmaterial mit wenigstens einem Dotanden enthalten sind, und wobei ein organisches Lösungsmittel und eine weitere Komponente wie oben bereits beschrieben für eine Flüssigphasensynthese der Nanopartikel verwendet wird. Das Wirtsmaterial ist insbesondere ein Wirtsgitter, das Verbindungen des Typs XY enthält, wobei X ein Kation aus einem oder mehreren Elemententen der Hauptgruppen 1a,2a, 3a; 4a, der Nebengruppen 2b, 3b, 4b, 5b, 6b, 7b oder der Lanthaniden des Periodensystems ist, und Y entweder ein mehratomiges Anion aus einem oder mehreren Elementen der Hauptgruppen 3a, 4a, 5a, der Nebengruppen 3b, 4b, 5b, 6b, 7b, und oder 8b sowie Elementen der Hauptgruppen 6a, und oder 7, oder ein einatomiges Anion aus der Hauptgruppe 5a, 6a oder 7a des Periodensystems ist.

Das Endprodukt des erfinderischen Verfahrens und seiner Abwandlungen ist jeweils ein Stoff d.h., eine Substanz, für den hierin ein absoluter, vom Herstellungsverfahren unabhängiger Stoffschutz beansprucht wird.

Das Wirtsmaterial kann verbindungen aus der Gruppe der Sulfide, Selenide, Sulfoselenide, Oxysulfide, Borate, Aluminate, Gallate, Silikate, Germanate, Phosphate, Halophosphate, oxide, Arsenate, Vanadate, Niobate, Tantalate, Sulfate, Wolframate, Molybdate, Alkalihalogenate sowie andere Halogenide oder Nitride enthalten.

Des weiteren wird gemäß dem vorgenannten ersten Aspekt der vorliegenden Erfindung als Dotierung ein oder mehrere Elemente aus einer Menge enthaltend Elemente der Hauptgruppen 1a, 2a oder Al, Cr, Tl, Mn, Ag, Cu, As, Nb, Ni, Ti, In, Sb, Ga, Si, Pb, Bi, Zn, Co und oder Elemente der Lanthaniden verwendet.

Bevorzugt kann, ggf. pro gewünschter Fluoreszenzfarbe, ein aufeinander abgestimmtes Dotandenpärchen, insbesondere Cer und Terbium, mit gutem Energieübertrag verwendet werden, wobei der eine als Energieabsorber, insbesondere als UV-Lichtabsorber und der andere als Fluoreszenzlichtemitter wirkt.

Prinzipiell können als Material für die dotierten Nanopartikel folgende Verbindungen gewählt werden, wobei in der folgenden Notation links vom Doppelpunkt die Wirtsverbindung und rechts vom Doppelpunkt ein oder mehrere Dotierelemente aufgeführt sind. Wenn chemische Elemente durch Kommata voneinander getrennt und eingeklammert sind, können sie wahlweise verwendet werden. Eine erste Auswahlliste ist wie folgt definiert, wobei je nach gewünschter Fluoreszenzeigenschaft der herzustellenden Nanopartikel eine oder auch mehrere der zur Auswahl gestellten Verbindungen herangezogen werden können:

LiI:Eu; NaI:Tl; CsI:Tl; CsI:Na; LiF:Mg; LiF:Mg,Ti; LiF:Mg,Na; KMgF₃:Mn; Al₂O₃: Eu; BaFCI:Eu; BaFCI:Sm; BaFBr:Eu; BaFCl_{0,5}Br_{0,5}:Sm; BaY₂F₈:A(A= Pr, Tm, Er, Ce); BaSi₂O₅:Pb; BaMg₂Al₁₆O₂₇: Eu ; BaMgAl₁₄O₂₃:Eu; BaMgAl₁₀O₁₇:Eu; (BaMgAl₂O₄:Eu; Ba₂P₂O₇:Ti; (Ba, Zn, Mg)₃Si₂O₇:Pb; Ce(Mg, Ba) Al₁₁O₁₉; Ce_{0,65}Tb_{0,35}MgAl₁₁O₁₉; MgAl₁₁O₁₉:Ce,Tb; MgF₂:Mn; MgS : Eu; MgS:Ce; MgS:Sm; MgS(Sm, Ce); (Mg, Ca)S:Eu; MgSiO₃:Mn; 3,5MgO._{0,5}MgF₂GeO₂:Mn; MgWO₄:Sm; MgWO₄:Pb; 6MgOAs₂O₅:Mn; (Zn, Mg)F₂:Mn; (Zn, Be)SO₄:Mn; Zn₂SiO₄ :Mn; Zn₂SiO₄:Mn,As; ZnO:Zn; ZnO:Zn,Si,Ga; Zn₃(PO₄)₂:Mn; ZnS:A (A=Ag, Al, Cu); (Zn, Cd)S:A (A=Cu, Al, Ag, Ni); CdBO₄:Mn; CaF₂:Mn; CaF₂:Dy; CaS:A (A=Lanthanide, Bi); (Ca, Sr)S:Bi; CaWO,:Pb; CaWO₄:Sm; CaSO₄:A (A= Mn, Lanthanide); 3Ca₃(PO₄)₂Ca(F, Cl)₂:Sb, Mn; CaSiO₃:Mn, Pb; Ca₂Al₂Si₂O₇:Ce; (Ca, Mg)SiO:Ce; (Ca, Mg)SiO₃:Ti; 2Sr06(B₂O₃)SrF₂:Eu; 3Sr₃(PO₄)₂.CaCl₂:Eu; A₃(PO₄)₂.ACl₂:EU (A=Sr, Ca, Ba); (Sr,Mg)₂P₂O₇:Eu; (Sr, Mg)₃(PµO₄)₂:Sn; SrS:Ce; SrS:Sm,Ce; SrS : Sm; SrS:Eu; SrS:Eu,Sm; SrS:Cu,Ag; Sr₂P₂O₇: Sn; Sr₂P₂O₇:Eu; Sr₄Al₁₄O₂₅:Eu; SrGa₂S₄:A (A=Lanthanide, Pb); SrGa₂S₄:Pb; Sr₃Gd₂Si₆O₁₈:Pb,Mn; YF₃:Yb,Er; YF₃:Ln (Ln=Lanthanide); YLiF₄:Ln (Ln=Lanthanide); Y₃Al₅O₁₂:Ln (Ln=Lanthanide); YAl₃(BO₄):Nd,Yb; (Y,Ga)BO₃ : Eu; (Y,Gd)BO₃,:Eu; Y₂Al₃Ga,O₁₂:Tb; Y₂SiO₅:Ln (Ln=Lanthanide); Y₂O:Ln (Ln=Lanthanide); Y₂O₂S:Ln (Ln=Lanthanide); YVO₄:A (A=Lanthanide, In); Y(P,V)O₄:Eu; YTaO₄:Nb; YAlO₃:A (A= Pr, Tm, Er, Ce); YOCl:Yb,Er; LnPO₄:Ce,Tb (Ln=Lanthanide oder Mischungen von Lanthaniden); LuVO₄:Eu; GdVO₄ : Eu; Gd₂O₂S : Tb; GdMgB₅O₁₀:Ce,Tb; LaOBrTb; La₂O₂S:Tb; LaF₃:Nd,Ce; BaYb₂F₈:Eu; NaYF₄:Yb,Er; NaGdF₄:Yb,Er; NaLaF₄:Yb,Er; LaF₃:Yb,Er,Tm; BaYF₅:Yb,Er; Ga₂O₃:Dy; GaN:A (A= Pr, Eu, Er, Tm); Bi₄GeO₁₂; LiNbO₃:Nd,Yb; LiNbO₃:Er; LiCaAlF₆:Ce; LiSrAlF₆:Ce; LiLuF₄:A (A= Pr, Tm, Er, Ce); GD₃Ga₅O₁₂:Tb; GD₃Ga₅O₁₂:Eu; Li₂B₄O₇:Mn; SiOₓ:Er,Al (0<x<2).

Eine zweite Auswahlliste ist wie folgt definiert: YVO₄:Eu; YVO₄:Sm; YVO₄:Dy; LaPO₄: Eu; LaPO₄ : Ce; LaPO₄:Ce,Tb; ZnS:Tb; ZnS:TbF₃; ZnS : Eu; ZnS:EUF₃; Y₂O₃:Eu; Y₂O₂S:Eu; Y₂SiO₅:Eu; SiO₂:Dy; Si.O₂:Al; Y₂O₃:Tb; CdS:Mn; ZnS:Tb; ZnS:Ag; ZnS:Cu; Ca₃(PO₄)₂:Eu²⁺; Ca₃(PO₄)₂:Eu²⁺, Mn²⁺ ; Sr₂SiO₄:Eu²⁺ ; oder BaAl₂O₄:Eu²⁺

Eine dritte Auswahlliste für die dotierten Nanopartikel ist wie folgt definiert:
MgF₂:Mn; ZnS:Mn; ZnS:Ag; ZnS:Cu; CaSiO₃:A; CaS:A; CaO:A; ZnS:A; Y₂O₃:A oder MgF₂:A, wobei A ein Element der Lanthaniden ist.

Ein weiterer Aspekt der vorliegenden Erfindung ist dadurch gekennzeichnet, daß in-dem erfindungsgemäßen Herstellungsverfahren Metallchloride zur Gewinnung des kationischen Bestandteils des Wirtsmaterials, oder ein Phosphatsalz zur Gewinnung seines anionischen Bestandteils verwendet werden, und ein Säurefänger, bevorzugt ein Amin, besonders bevorzugt Tioctylamin (C₂₄H₅₁N) zur Synthese hinzugefügt wird. Verwendet man statt der im Stand der Technik beschriebenen Nitratsalze Chloridsalze, kann die Ausbeute des Materials, bezogen auf die Menge der eingesetzten Metallsalze um mehr als 70 % auf ca. 80% gesteigert werden, was ein Herstellungsverfahren im industriellen Maßstab ermöglicht

Damit läßt sich insbesondere ein Wirtsmaterial mit einem metallischen Kation und Phosphor als Bestandteil des anionischen Teils des Wirtsgitters in vorteilhafter Weise herstellen.

Neben den zuvor genannten phosphororganischen Verbindungen Phosphinsäureester, Phophonsäurediester, Phosphorsäuretriester (Trialkyphosphate) als Wachstumssteuerkomponente können gemäß dem oben genannten Aspekt der vorliegenden Erfindung die folgenden chemischen Substanzen in bevorzugter Weise als Lösungsmittel oder Komponente davon bei der Gewinnung der erfindungsgemäßen Nanopartikel verwendet werden:

Phosphorsäureamid, bevorzugt Hexamethylphosphorsäuretriamid, ein Phosphoramidoxid, bevorzugt Tris-(dimethylamino)-phosphinoxid, Trisethylhexylphosphat, Trialkylphosphin, insbesondere bevorzugt Trioctylphosphin, hier auch als TOP abgekürzt, und bevorzugt Trioctylphosphinoxid, hier auch als TOPO abgekürzt, beide kommerziell erhältlich von der Firma Sigma Aldrich Chemie GmbH, Deisenhofen, Deutschland, Phosphoramid, bevorzugt Tris-(dimethylamino)-phosphin, Phosphoramidoxid, bevorzugt Tris-(dimethylamino)-phosphinoxid.

Die vorgenannten, bevorzugten Lösungsmittel können in vorteilhafter Weise zur Gewinnung von LAPO₄ als besonders bevorzugtem Wirtsmaterial herangezogen werden. Ein LaPO₄ Wirtsgitter kann in bevorzugter weise derart dotiert werden, daß als Dotierung zwei Elemente in unterschiedlichen relativen Konzentrationen zueinander verwendet werden, wobei das eine Dotierelement ein lokales Maximum des Absorptionsspektrums für Licht, bevorzugt UV-Licht besitzt, und das andere Dotierelement ein Fluoreszenzemissionsspektrum hat, das mindestens ein lokales Maximum aufweist, das einen Abstand Δλ/ λ vom Absorptionsmaximum des ersten Dotierelements von wenigstens 4%, bevorzugt von mehr als 20% aufweist.

Durch eine solche Maßnahme kann sichergestellt werden, daß die dotierten Nanopartikel durch nicht sichtbares Licht angeregt werden und Fluoreszenzstrahlung im sichtbaren Bereich des Lichts abgeben. Somit stört das Anregungslicht nicht das emmittierte Fluoreszenzlicht. Eine solche Maßnahme empfiehlt sich insbesondere im Bereich von Sicherheitsmarkierungen, auf die weiter unten näher eingegangen wird. Durch geschickte Wahl der Dotanden kann außerdem ein ganz spezieller Anregungsspektralbereich gewählt werden, beispielsweise im UV-C-Bereich um 250 Nanometer herum.

Das mit der Verwendung des vorerwähnten TOP/TOPO als Lösungsmittel verbesserte Verfahren kann zur Gewinnung des besonders bevorzugten LaPO₄ als Wirtsmaterial herangezogen werden, das mit einem ersten absorbierenden Dotanden als Sensibilisator, besonders bevorzugt Ce³⁺ als selektiver UV-C Absorber, und einem emittierenden zweiten Dotierungsmaterial, besonders bevorzugt Tb³⁺ dotiert wird.

Wenn als Lösungsmittel TOP und/ oder TOPO verwendet wird, und eine Dotierung mit Terbium im Bereich 0,5 bis 30 Molprozent, bevorzugt 5 bis 25 Molprozent und besonders bevorzugt 13 bis 17 Molprozent erfolgt, wobei zwischen Lanthan und Cer entsprechend ein Molverhältnis im Verhältnis von 0.13 bis 7.5, bevorzugt von 0.25 bis 4, und besonders bevorzugt zwischen 0.9 bis 1.1 vorliegt, und Metallchloridsalze als Metallquelle dienen, dann lassen sich qualitativ hochwertig fluoreszierende Nanopartikel herstellen, die insbesondere für Hochsicherheitsmarkierungen vorteilhaft verwendbar sind.

Wird TOP und/ oder TOPO als Lösungsmittel während des Herstellungsverfahren verwendet, so ergeben sich gegenüber Phophorsäureestern die Vorteile einer höheren Herstellungstemperatur, von ca. 530 bis ca. 620 Kelvin, einer damit verbundenen besseren Einbindung der Dotierungssubstanz und einer daraus resultierenden hören Intensität des emittierten Lichts, was ein entscheidender Faktor für die Anwendbarkeit eines Fluoreszenzmarkers ist. Ausserdem kann bei hohen Synthesetemperaturen auch ein Wirtsgitter erfolgreich dotiert werden, selbst wenn die Atomgröße der Dotanden nur schlecht zur Ionengröße der Wirtsionen paßt. Somit können gezielt diverse Fluoreszenzfarben erzeugt werden.

Unmittelbar nach Herstellung ist die Oberfläche der Nanopartikel von einer Hülle bestehend aus Lösungsmittelresten der Wachstumssteuerkomponenten, beispielsweise aus Trioctylphosphin, hier auch als TOP abgekürzt, und Trioctylphosphinoxid, hier auch als TOPO abgekürzt, oder eines der anderen, oben beschriebenen, umgeben. Dies ermöglicht einen vereinfachten Umgang mit den Nanopartikeln im Anschluß an deren Herstellung, da durch diese Oberflächenmoleküle (Lösungsmittelreste) eine verbesserte Löslichkeit in handelsüblichen Lösungsmitteln vermittelt wird, ohne die Teilchen in einem zweiten aufwendigen Schritt chemisch zu verändern.

Der aus dem Verfahren gewonnene Nanopartikelstoff kann nach Ausfällen und Trocknen, beispielsweise durch Heißluft als weich zerbröselbares, sehr feinkörniges Pulverkonzentrat vorliegen, das dann seinerseits in eine Vielzahl von Trägerstoffen eingebettet werden kann, je nachdem, wie es der jeweilige Anwendungsfall erfordert. Damit können die Nanopartikel in Folien eingearbeitet werden, beispielsweise bei Aluminiumfolien durch Einwalzen, oder bei Polymerfolien, etwa aus Polyethylen oder Polypropylen, etc., durch Einbringen im flüssigen Polymerzustand.

Der erfindungsgemäße Stoff ist anorganisch und daher resistent gegen Ausbleichen. Damit ist er auch unter extremen Bedingungen wie Temperaturen von nahe 0 (Null) Kelvin bis ca. 400 Kelvin mit guter Ausbeute, ohne den Verbund mit einem weiteren Schutzmaterial sowie in organischen und wäßrigen Lösungsmitteln einsetzbar.

Es tritt keine Konzentrationslöschung bei hohen Partikelkonzentrationen im Gegensatz zu organischen Fluoreszenzmarkern auf.

Das Material kann durch nachträgliche chemische Modifikation der Oberfläche an die Lösungsbedingungen in verschiedenen Lösungsmitteln angepaßt werden.

Der aus dem Verfahren gewonnene Nanopartikelstoff kann des weiteren als Kolloid in einer Trägerflüssigkeit, insbesondere in einem Lack oder einer Farbenflüssigkeit vorliegen, oder als Feinstaub / Aerosol in einem Trägeraerosol oder Gas.

Der aus Sicht der Anwendung wesentliche Kernpunkt der vorliegenden Erfindung ist die Art des emittierten Lichtes der erfindungsgemäß hergestellten Nanopartikel. Die Emissionslinien, d.h., die Wellenlängenverteilung des emittierten Lichts der oben beschriebenen Dotierungsatome aus den Seltenerdelementen sind äußerst schmal und liegen im Gegensatz zum Anregungslicht im sichtbaren Bereich.

Daraus folgt eine charakteristische Eigenschaft des jeweiligen Nanopartikeltyps, die sich aus der spezifischen Farbe und der spezifischen Halbwertsbreite des emittierten Lichts des oder der - einer Mehrzahl von - gezielt auswählbaren Emitterdotanden ergibt. Diese Eigenschaften sind derzeit mit keinem anderen Material außer den beanspruchten seltenerddotierten Substanzen erreichbar. Auch die gezielt ausübbare Auswahl des Absorptionsdotanden, wie oben bevorzugt mit dem Element Cer erwähnt, ergänzt die Originalität im Sinne einer Unverwechselbarkeit mit anderen fluoreszierenden Substanzen. Diese Tatsache kann in vorteilhafter Weise bei Hochsicherheitsmarkierungen ausgenutzt werden.

Gemäß einem weiteren Aspekt der vorliegenden Erfindung können nun die als sogenannte Phosphore, siehe "Ullmanns Encyclopedia of Industrial Chemistry, WILEY - VCH, 6th Edition, 1999, Electronic Release, Luminescent Materials: 1 Inorganic Phosphors", bekannten Verbindungen nicht mehr nur wie im Stand der Technik als Makromaterial - auch als sogenanntes bulk Material bezeichnet - hergestellt werden, sondern auch als Nanopartikel auf einfache Weise, da ohne Autoklaven, und damit wirtschaftlich hergestellt werden.

Im wesentlichen unterbleiben dabei die für eine Dotierung von Nanopartikeln notwendigen und spezifischen Arbeitsschritte. Für den Rest des Verfahrens - Synthese in organischem Lösungsmittel aus den Ausgangsstoffen, wie sie vorher beschrieben wurden, kann daher auf die Beschreibung des Herstellungsverfahrens für die anorganisch dotierten Nanopartikel verwiesen werden.

Daraus ergibt sich eine neue Verwendungsmöglichkeit dieser Menge von Stoffen - oben als Phosphore bezeichnet - als Nanopartikel insbesondere zur Markierung von Gegenständen, und zwar mit oder ohne eigenständige Dotierung.

Dabei können Größenbereiche der Nanopartikel von 1 nm bis etwa 1000 nm gezielt herbeigeführt werden, insbesondere unter Ausschluß von Sauerstoff oder Wasser oder Wasserdampf während der Synthese. Dabei liegt erfindungsgemäß eine enge Größenverteilung vor, wie nachfolgend näher erläutert wird.

Je nach eingesetzten Steuerkomponenten des Lösungsmittels ist eine sehr einheitliche Größe der Nanopartikel erreichbar. Sogar homogen kleine Nanopartikel sind erfindungsgemäss herstellbar in einem Größenbereich von 1 bis 8 nm, bevorzugt in einem Mittenbereich von 4-5 nm, mit einer Standardbweichung geringer als 30 %, bevorzugt geringer als ca. 10%. Damit können die Nanopartikel in sehr fein strukturierte Trägermaterialien eingebaut werden, ohne die Trägerstruktur merkbar zu verändern, so wie es der jeweilige Anwendungszweck gerade erfordert, z.B., bei der Einbettung in sehr dünne und/ oder sehr weiche Polymerfolien. Beispielsweise bleiben Folien transparent, und werden nicht getrübt, wie es bei grösseren (ab ca. 50 nm) Partikeln der Fall wäre.

Dies gilt im Besonderen für die Nanopartikel aus der Stoffgruppe der Phosphate der Seltenerdmetalle, oder Phosphate der III. Hauptgruppe, oder Phosphate von Calcium (CA), Strontium (Sr), oder Barium (Ba), wobei die Nanopartikel eine Ausdehnung aufweisen von maximal 15 nm, bevorzugt maximal 10 nm, längs ihrer längsten Achse besitzen, und am meisten bevorzugt 4 bis 5 nm mit einer Standardabweichung geringer als 30 %, bevorzugt geringer als 10%.

Durch die oben erwähnte Möglichkeit, die Familie der Phosphore als Nanoteilchen herzustellen, eröffnet sich erfindungsgemäß insbesondere die Verwendung von Phosphoren, insbesondere Phosphate enthaltenden Nanopartikeln, bevorzugt die Verwendung von dotierten Nanopartikeln, und besonders bevorzugt, die oben beschriebenen, anorganisch dotierten Nanopartikel als Fluoreszenzmarker im allgemeinen, um beliebige Gegenstände, insbesondere Informationsträger wie etwa CDs, Computerbauteile, Fahrzeugbauteile, Motorenteile, Dokumente, Schließanlagen, Diebstahlsicherungseinrichtungen, für sichtbares Licht transparente Gegenstände, etwa Fensterscheiben, Brillengläser, Kontaktlinsen oder transparente Schirme zu kennzeichnen, und im Besonderen in dem Bereich der Hochsicherheitsmarkierung, wie es z.B. bei Geldscheinen, Schecks und Scheckkarten sowie Kunstgegenständen und Schmuck erforderlich bzw. wünschenswert ist.

Durch Einbettung der oben genannten Gruppen von Nanopartikeln oder diese tragende Nanopartikelträgerstoffe in Markierungsgegenstände, sei es als Beschichtung oder Folienüberzug, oder als aufgebrachte Lackierung können erfindungsgemäß beliebige Gegenstände je nach den Erfordernissen des Einzelfalles herstellungstechnisch günstig markiert werden, ohne das äußere Erscheinungsbild des Gegenstands oder dessen Haptik oder andere gegenstandsbezogenen Eigenschaften zu stören.

In bevorzugter Weise sind die Nanopartikel derart in den Markierungsgegenstand inkorporiert oder mit ihm verbunden, dass die erfindungsgemäßen Partikel oder erfindungsgemäße Substanz durch vorbestimmbare Energiezufuhr, bevorzugt durch eine elektromagnetische Bestrahlung, insbesondere Strahlung mit einer Wellenlänge kleiner als 300 nm, oder durch Bestrahlung mit Teilchen oder Elektronen, anregbar ist, und eine extern vom Gegenstand nachweisbare Fluoreszenzemission, bevorzugt im sichtbaren Bereich des Lichts, oder im UV- oder nahen IR-Bereich (NIR) bewirkt.

Dabei kann im Grundsatz ein oder mehrere Nanopartikeltypen so gewählt werden, daß die an die Markierung gestellten, speziellen Anforderungen erfüllt sind. Insbesondere können ein oder mehrere Anregungsspektralbereiche von ihrer Lage im Spektrum und von ihrer Bandbreite her bewußt ausgewählt werden. Ebenso kann das Fluoreszenzspektrum gezielt ausgewählt werden, einfarbig, mehrfarbig, sichtbar (VIS), oder nicht sichtbar und nur durch gezielte Hilfsmittel detektierbar, etc..

Außerdem können Flüssigkeiten und Gase zum Zwecke der Prüfung, ob ein solcher Stoff irgendwo vorhanden ist oder nicht, markiert werden, wenn der NPTS in das betreffende Medium eingebracht wird. Das kann im Zuge von Sicherheitsüberprüfungen, wie bei Rißprüfungen bei Flugzeugen, Pipelines, Wasserleitungen und anderen, Flüssigkeiten führenden Systemen relevant sein. Der Vorteil liegt dabei in den speziellen unverwechselbaren Eigenschaften des Materials, wodurch das Prüfmedium gut verfolgbar ist.

Das Material ist vollständig transparent, streufrei und farblos und kann damit überall unerkannt appliziert werden.

Auch im Bereich der Produktrückführung vom Verbraucher zum Hersteller und der damit verbundenen notwendigen eindeutigen Kennzeichnung durch den Hersteller empfiehlt sich eine Kennzeichnung, die für den Normalbetrachter nicht sichtbar ist, sondern erst nach einer Anregung durch besondere Energieformen, wie etwa UV-C-Licht mit beispielsweise 250 nm Wellenlänge.

Im Bereich der Hochsicherheitsmarkierung kann das Material - wenn gewünscht und derartig hergestellt, beispielsweise im Falle einer Cer/Terbium Dotierung von LaPO₄ nur mit einer speziellen UV-C-Lampe von 255 nm Wellenlänge zur Fluoreszenz angeregt und eine entsprechende Markierung sichtbar gemacht werden. Sogenannte Schwarzlichtlampen, deren Emission bei 366 nm liegt, sind für eine solche Anregung ungeeignet.

Eine solche Verwendung kann beispielsweise durch Einbindung des Markerstoffs in ein im Anregungsspektralbereich offenen, d.h., transparenten Material, bevorzugt in ein im UV-C Bereich (Wellenlänge <300 nm) offenes Polymer, wie es z.B. bei handelsüblichem Polypropylen oder Polyethylen etc. der Fall ist. Ebenso können Metallfolien verwendet werden, sofern sie dieser Bedingung genügen. Je geringer die Dicke der Folie, umso weniger wichtig wird dieses Kriterium, da bei extrem dünnen Folien die eingebetteten Nanopartikel sehr oberflächennah liegen, so daß praktisch immer eine gewisse Anregung stattfinden kann.

Anregungswellenlänge und Emissionswellenlänge liegen in vorteilhafter Weise bei Verwendung eines passenden Dotierungspärchens bis zu 400 nm auseinander. Das ermöglicht eine unverwechselbare Detektion der Emissionswellenlänge ohne störendes Anregungslicht. Dabei ist eine Anregung im UV-C-Bereich bei etwa 255 nm oder eine im Infrarotbereich bevorzugt, da sie beide nicht in dem sichtbaren Bereich liegen und relativ einfach in der Handhabung sind. Es lassen sich auch Druckmedien, also etwa Papier, Folien, etc., mit den erfindungsgemäßen Nanopartikeln etwa unter Verwendung entsprechender Schablonen und Aufsprühen einer Trägerflüssigkeit versehen, die erst nach erfolgter Anregung entsprechende Muster, Bilder, etc., bestimmter Art farbig oder mehrfarbig zeigen, die vorher unsichtbar sind.

Im Bereich der Optoelektronik können selbst Photozellen und andere lichtsensible Bauteile mit der erfindungsgemäßen Substanz beschichtet werden, da die Fluoreszenz erst in einem Bereich außerhalb des Normalbetriebs des Bauteils auftritt, ohne den Normalbetrieb zu stören.

Damit ein Authentifizierungsnachweis für eine Markierung nicht durch manuelle, aufwendige Spektralanalyse erfolgen muß, wird das folgende und in vorteilhafter Weise automatisierbares Detektionsverfahren vorgeschlagen, um schnell und einfach zu erkennen, ob eine bestimmte Probe oder Probesubstanz mit einem vorgegebenen Nanopartikeltyp markiert ist oder nicht:

Das Detektionsverfahren zur Erkennung der Fluoreszenz einer Probesubstanz als übereinstimmend mit einem vorgegebenen Nanopartikeltyp (Referenzsubstanz) erfordert in seiner einfachsten Variante einen Fluoreszenzemissionshauptpeak der dem für den Nanopartikeltyp charakterischen Emitterdotanden entspricht. Das Detektionsprinzip besteht im Wesentlichen aus der Anwendung von bis zu drei Interferenzfiltern, die speziell für eine bestimmte Wellenlänge offen sind. Da das Emissionslicht ausgesprochen schmalbandig ist, erfolgt die Erkennung über eine Vergleichsmessung in engem Abstand. Mißt die Apparatur ca 1-10 nm links und rechts neben der Emissionshauptline mehr als 10 - 50 % bevorzugt mehr als 5 - 20 % der Intensität der Hauplinie, so liegt eine Fälschung vor. Diese einfache Verfahrensvariante enthält dann die folgenden, wesentlichen Schritte:
Anregen der Substanz mit einem für den vorgegebenen Nanopartikeltyp als erfolgreich bekannten Anregungsspektrum, wie weiter oben bereits erwähnt wurde,
Filtern des Hauptpeakspektralbereichs, beispielsweise mit einem geeignet eingerichteten Interferenzfilter,
Filtern wenigstens eines Nebenspektralbereichs neben dem Hauptpeak, bei dem für den vorgegebenen Nanopartikeltyp höchstens geringe Intensität erwartet wird, beispielsweise ebenfalls mit einem entsprechend eingestellten Interferenzfilter,
Quantifizieren der gefilterten Strahlungsintensitäten in den vorgegebenen Spektralbereichen, beispielsweise mit einer Mehrzahl von photosensitiven Elementen, beispielsweise Photozellen, von denen jeweils eine optisch direkt einem jeweiligen Interferenzfilter gekoppelt ist, und
Feststellen der Relation der gefilterten Strahlungsintensitäten zueinander, beispielsweise durch Auswertung des von der Photozelle kommenden Signals,
Anerkennen der Probesubstanz als übereinstimmend mit dem vorgegebenen Nanopartikeltyp, wenn die eine oder mehreren Relationen Nebenspektralbereichsstrahlung zu Hauptpeakstrahlung kleiner ist (sind) als ein entsprechender, vorgegebener Schwellwert.

In vorteilhafter Weise kann die vorab bekannte und somit definierte Halbwertsbreite eines Hauptpeaks der Referenzsubstanz herangezogen werden, um die Schärfe des Referenzpeaks zu definieren, und um den oben erwähnten Schwellwert als Authentizitätserfordernis zu bestimmen.

Wenn der Nebenbereich nur auf einer Seite vom Hauptpeak erfasst wird, gibt es einen Schwellwert, oder im allgemeinen zwei, wenn beiderseitig vom Hauptpeak Nebenbereiche erfasst werden. Ist der Peak ausreichend symmetrisch, kann ein einziger Schwellwert genügen.

In vorteilhafter Weise werden ausser dem Hauptpeak zwei oder mehr Nebenspektralbereiche gefiltert und ausgewertet. Dies kann zu einer erhöhten Sicherheit der Detektion beitragen.

Der Vorteil an den beiden vorgenannten Varianten besteht darin, daß der Signalerfassungs- und Auswerteaufwand nur gering ist, denn das von der Photozelle kommende Signal läßt sich leicht und billig digitalisieren und computergestützt auswerten.

In einer weiteren Variante des Detektionsverfahrens wird ein gegebenenfalls vorhandenes, besonderes Bild, etwa barcodes oder komplexere Abbildungen oder Muster der Fluoreszenzstrahlungsquelle zusätzlich beispielsweise durch eine CCD Kamera erfasst und durch entsprechende Bildverarbeitungslogik vom Stand der Technik ausgewertet. Hierdurch lassen sich die Anforderungen an Fälschungssicherheit im Bereich von Hochsicherheitsmarkierungen erhöhen, denn zusätzlich zu der spektralen Übereinstimmung muß noch das Muster mit einem separat gespeicherten Referenzmuster übereinstimmen, damit das Verfahren die Markierung der Probesubstanz als authentisch mit der der Referenzsubstanz anerkennt.

Die dem Verfahren entsprechende Detektionsvorrichtung ergibt sich vom Aufbau her im wesentlichen aus den funktionalen Merkmalen, wie sie oben beschrieben wurden. Auch tragbare Detektoren können hergestellt werden, da sämtliche Elemente des Detektionssystems klein und leicht herstellbar bzw. bis auf Programmierlogik für die Signalauswertung kommerziell erwerblich sind.

Neben der oben erwähnten Verwendungsmöglichkeit für Markierungszwecke kann die erfindungsgemäßen Stoffe als Schutzschicht gegen harte UV-Strahlung und als Wandler derselben in sichtbares Licht verwendet werden, sofern sie im harten UV-Bereich Energie aufnehmen und im sichtbaren Bereich abgeben. Damit kann die Empfindlichkeit kommerzieller Detektoren in diesem Energiebereich deutlich gesteigert werden.

In Verwendung mit Sonnenkollektoren - beispielsweise, wenn die lichtaufnehmende Fläche eine erfindungsgemäße Beschichtung mit den o.g. Wandlereigenschaften besitzt - kann harte UV-Strahlung in visuelles Licht umgewandelt und damit zu einer Steigerung des Kollektorwirkungsgrades beitragen werden.

### ZEICHNUNG

Es zeigen:
- Fig. 1: schematisch Oberflächenmoleküle eines dotierten Nanopartikels nach dem Herstellungsverfahren in TOP/TOPO Lösungsmittel; und
- Fig. 2: zeigt beispielhaft das Absorptions-(Anregungswellenlänge) und Fluoreszenzspektrum (Emissionswellenlänge) von LaPO₄Ce:Tb in CHCl₃.

### BESCHREIBUNG DER AUSFÜHRUNGSBEISPIELE UND BEZUGSBEISPIELE

Im folgenden wird eine detaillierte Beschreibung verschiedener Ausführungsbeispiele gegeben, und von Bezugsbeispielen, die nicht unter Anspruch 1 fallen, aber zum Verständnis der Erfindung dienen könnten.

### LaPO₄Ce:Dy (Bezugsbeispiel 1)

a) In einem ersten 50 ml fassenden Hauptkolben mit Intensivkühler, Temperaturfühler mit angeschlossenem Heizpilz werden 20 ml kommerziell erwerbbares TOP (90%) eingefüllt und bei ca. 323 Kelvin (K) während einer Stunde unter Rühren evakuiert.
b) In einem zweiten Kolben werden 2g TOPO und 2,3 ml TOP vermischt und das TOPO unter leichtem Erwärmen geschmolzen, so daß eine homogene Mischung entsteht.
c) In einem dritten Kolben werden die Salze LaCl₃ (0,001 mol), CeCl₃ (0,0012 mol) und DyCl₃ (0,00024 mol) mit 3 ml Methanol gelöst und anschließend in die TOP/TOPO - Mischung überführt.
d) Danach werden 0,0028 mol H₃PO₄ in den oben genannten 50 ml fassenden Kolben gegeben und bei 323 Kelvin unter Vakuum gerührt.
e) Dann wird das Methanol aus der Salz-, TOP/TOPO-, Methanol - Mischung unter Vakuum bei Raumtemperatur abdestilliert und die verbleibende Lösung in den ersten Kolben überführt.
f) Anschließend wird die Temperatur auf 533 Kelvin erhöht und über Nacht gerührt. Die so entstandenen Nanopartikel können dann in 30 ml Toluol gelöst und mit 20 ml Methanol gefällt werden.

Es ergibt sich eine Substanz, die dann beipieliweise unter
g) kontrollierter Zuführung von Warmluft, etwa von 310 Kelvin getrocknet werden kann, so dass sich eine Trockensubstanz ergibt.
h) Optional kann die Trockensubstanz zu einem feinen Staub mittels druck-kontrolliertem Reibens zerbröselt werden, um auch einen Feinstaub gewünschter Korngröße zu erhalten.

Im folgenden wird eine Beschreibung für die beispielhafte Herstellung von LaPO₄Ce:Tb gegeben:

### LaPO₄Ce:Tb (Bezugsbeispiel 2)

a) In einem 50 ml Hauptkolben mit Intensivkühler, Temperaturfühler mit angeschlossenem Heizpilz werden 20 ml Trisethylhexylphosphat eingefüllt und bei ca.323 K 1h unter Rühren evakuiert.
b) In einem zweiten Kolben werden 10 ml Trisethylhexalphosphat und 3,2 ml Trioctylamin vermischt und mit 0,0028 mol H₃PO₄ versetzt.
c) In einem dritten Kolben werden die Salze LaCl₃ (0,001 mol), CeCl₃ (0,0012 mol) und TbCl₃ (0,00024 mol) mit 3 ml Methanol gelöst und anschließend in den Hauptkolben überführt.
d) Haben sich die Metallsalze in Methanol vollständig gelöst, wird die Mischung in den Hauptkolben überführt und das Methanol bei 323 K abdestilliert.
e) Danach wird die Phosphorsäure enthaltende Lösung dazugegeben und der Kolben über Nacht bei Temperatur von 473 K gerührt. Wenn die Innentemperatur auf 448 K gefallen ist, wird
f) die Reaktion abgebrochen und
g) die so entstandenen Nanoteilchen können mit einem 4 fachen Überschuß an Methanol (80 ml) aus der Lösung gefällt werden.

solange mit dest. Wasser waschen, bis Peptisation (= kleine Teilchen lösen sich wieder) einsetzt. Die kolloidale Lösung 60 min bei 12000 g zentrifugieren und den Niederschlag der Nanoteilchen-durch Dekantieren vom Überstand trennen.

### Herstellung von Ca₃(PO₄)₂:Eu²⁺ Nanopartikeln (Bezugsbeispiel 3)

300 ml Tris-(Ethylhexyl)-phosphat werden mit Stickstoff sauerstofffrei gespült und mit einer Lösung von 10.48 g von CaCl₂ . 2 H₂O (71.25 mmol), und 836 mg EuCl₂ (3.75 mmol) in 100 ml trockenem Methanol versetzt. Unter Vakuum wird bei Temperaturen von 303 bis 313 K das Methanol und das Kristallwasser abdestilliert. Anschließend werden 4.90 g (50 mmol) kristalline Phosphorsäure in einer Mischung aus 65.5 ml (150 mmol) Trioctylamin und 150 ml Tris-(Ethylhexyl)-phosphat gelöst und zum restlichen Ansatz gegeben. Die Lösung wird mehrmals evakuiert und mit Stickstoff geflutet, um Oxidation zu Eu³⁺ zu minimieren. Anschließend wird der Ansatz auf 473 K erhitzt. Während des Erhitzens zersetzt sich ein Teil des Lösungsmittels, so daß der Siedepunkt der Mischung abnimmt. Sobald der Ansatz bei einer Temperatur von 443 bis 448 K siedet, läßt man abkühlen und versetzt mit der vierfachen Menge an Methanol. Der resultierende Niederschlag wird durch Zentrifugation abgetrennt, mehrmals mit Methanol gewaschen und getrocknet.

### Herstellung von Ca₃(PO₄)₂:Eu²⁺, Mn²⁺ Nanopartikeln (Bezugsbeispiel 4)

300 ml Tris-(Ethylhexyl)-phosphat werden mit Stickstoff sauerstofffrei gespült und mit einer Lösung von 9.78 g von CaCl₂ . 2 H₂O (70 mmol), 223 mg EuCl₂ (1 mmol), und 503 mg MnCl₂ (4 mmol) in 100 ml trockenem Methanol versetzt. Unter Vakuum wird bei Temperaturen von 303 bis 313 K das Methanol und das Kristallwasser abdestilliert. Anschließend werden 4.90 g (50 mmol) kristalline Phosphorsäure in einer Mischung aus 65.5 ml (150 mmol) Trioctylamin und 150 ml Tris-(Ethylhexyl)-phosphat gelöst und zum restlichen Ansatz gegeben. Die Lösung wird mehrmals evakuiert und mit Stickstoff geflutet, um Oxidation zu Eu³⁺ zu minimieren. Anschließend wird der Ansatz auf 473 K erhitzt. Während des Erhitzens zersetzt sich ein Teil des Lösungsmittels, so daß der Siedepunkt der Mischung abnimmt. Sobald der Ansatz bei einer Temperatur von 443 bis 448 K siedet, läßt man abkühlen und versetzt mit der vierfachen Menge an Methanol. Der resultierende Niederschlag wird durch Zentrifugation abgetrennt, mehrmals mit Methanol gewaschen und getrocknet.

Weitere, beispielhaft genannte, erfindungsgemässe Herstellungsformen sind die folgenden:

### 1. Mangandotierte Zinksilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dihexylether versetzen und die Alkohole am Rotationsverdampfer bei etwa 30 °C Badtemperatur abdestillieren.

1.3 g (9.5 mMol) ZnCl₂, und 99 mg (0.5 mMol) MnCl₂ · 4 H₂O in wenig Methanol auflösen und 3.3 ml (12 mmol) Tributylphosphat und 40 ml Dihexylether dazugeben. Unter Vakuum das Methanol abdestillieren. Unter Rühren 16.6 ml (38 mmol) Trioctylamin und obige Lösung von Tetrabutylammoniumsilikat-Lösung in Dihexylether dazugeben. Anschließend unter Stickstoff auf etwa 200 °C heizen und über Nacht bei dieser Temperatur rühren.

Von der Lösung das Lösungsmittel (vor allem Dihexylether) unter Vakuum abdestillieren.

Falls erwünscht, kann das zurückbleibende Rohprodukt wie oben angegeben-durch Waschen mit kleinen Mengen Ethanol, durch Diafiltration oder andere übliche Verfahren von den Nebenprodukten befreit werden.

### 2. Mangandotierte Zinksilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dihexylether versetzen und die Alkohole am Rotationsverdampfer bei etwa 30 °C Badtemperatur abdestillieren.

1.3 g (9.5 mMol) ZnCl₂ und 99 mg (0.5 mMol) MnCl₂ · 4 H₂O in wenig Methanol auflösen und 50 ml Bis-(2-ethylhexyl)amin dazugeben. Unter Vakuum das Methanol abdestillieren. Unter Rühren die obige Lösung von Tetrabutylammoniumsilikat-Lösung in Dihexylether dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren.
Das zurückbleibende Rohprodukt kann durch Diafiltration (Porengröße des Filters: 5000 -10000 Dalton) gegen Toluol in einer Rührzelle gereinigt und durch anschließendes Einengen der diafiltrierten Lösung am Rotationsverdampfer isoliert werden.

### 3. Bleidotierte Calciumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dibenzylether versetzen und die Alkohole am Rotationsverdampfer bei etwa 30 °C Badtemperatur abdestillieren.

1.67 g (9.5 mMol) Ca(CH₃COO)₂ · H₂O und 222 mg (0.5 mMol) Pb(CH₃COO)₂ · 3 H₂O in wenig Methanol auflösen und 3.3 ml (12 mmol) Tributylphosphat und 40 ml Dibenzylether dazugeben. Unter Vakuum das Methanol abdestillieren. Unter Rühren 16.6 ml (38 mmol) Trioctylamin und obige Lösung von Tetrabutylammoniumsilikat-Lösung in Dibenzylether dazugeben. Anschließend unter Stickstoff auf etwa 250 °C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 4. Cerdotierte Yttriumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dibenzylether versetzen und die Alkohole am Rotationsverdampfer bei etwa 30 °C Badtemperatur abdestillieren.

2.88,g (9.5 mMol) YCl₃ · 6 H₂O und 177 mg (0.5 mMol) CeCl₃ · 6 H₂O in wenig Methanol auflösen und 3.3 ml (12 mmol) Triisobutylphosphat und 40 ml Dibenzylether dazugeben. Unter Vakuum das Methanol abdestillieren. Unter Rühren 16.6 ml (38 mmol) Trioctylamin und obige Lösung von Tetrabutylammoniumsilikat-Lösung in Dibenzylether dazugeben. Anschließend unter Stickstoff auf etwa 250 °C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 5. Terbiumdotierte Yttriumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dioktylether versetzen und die Alkohole am Rotationsverdampfer bei etwa 30 °C Badtemperatur abdestillieren.

2.88 g (9.5 mMol) YCl₃ · 6 H₂O und 187 mg (0.5 mMol) TbCl₃ · 6 H₂O in wenig Methanol auflösen und 3.3 ml (12 mmol) Tributylphosphat und 40 ml Dibenzylether dazugeben. Unter

Vakuum das Methanol abdestillieren. Unter Rühren 16.6 ml (38 mmol) Tris-(2-Ethylhexyl)amin und obige Lösung von Tetrabutylammoniumsilikat-Lösung in Dioktylether dazugeben. Anschließend unter Stickstoff auf etwa 250 °C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 6. LaBO₃:Eu Nanopartikel:

3.528 g (9.5 mMol) LaCl₃ · 7 H₂O und 183 mg (0.5 mmol) EuCl₃ · 6 H₂O in
wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren 16.6 ml (38 mmol) Trioctylamin und 14.0 ml einer 1 M Lösung von Borsäure H₃BO₃ in Dihexylether (14 mmol) dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren.
Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 7. InBO₃:Tb Nanopartikel:

2.78 g (9.5 mMol) InCl₃ · 4 H₂O und 187 mg (0.5 mMol) TbCl₃ · 6 H₂O in wenig Ethanol lösen. 4.6 g (12 mmol). Trioctylphosphanoxid (TOPO) in 40 ml Dioktylether lösen und dazugeben. Unter Vakuum das Methanol und freigesetzte Kristallwasser abdestillieren.
Zu der trüben Lösung 16.6 ml Tris-(2-Ethylhexyl)amin und 14.0 ml einer 1 M Lösung von Borsäure H₃BO₃ in Dioktylether (14 mmol) dazugeben. Anschließend unter Stickstoff auf etwa 280 °C heizen und über Nacht bei dieser Temperatur rühren. Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 8. YBO₃:Eu Nanopartikel:

2.88 g (9.5 mMol) YCl₃ · 6 H₂O und 183 mg (0.5 mMol) EuCL₃ · 6 H₂O in
wenig Ethanol auflösen und 3.3 ml (12 mmol) Tributylphosphat und 40 ml Dihexylether dazugeben. Unter Vakuum das Ethanol und freigesetzte Kristallwasser abdestillieren.
Unter Rühren 12.9 ml (38 mmol) Trihexylamin und 14.0 ml einer 1 M Lösung von Borsäure H₃BO₃ in Dihexylether (14 mmol) dazugeben. Anschließend unter Stickstoff auf etwa 200 °C heizen und über Nacht bei dieser Temperatur rühren.
Von der Lösung den Dihexylether unter Vakuum abdestillieren. Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 9. LaAsO₄:Eu Nanopartikel:

1.38 g As₂O₅ in ca. 40 ml Methanol suspendieren. 1.0 ml Wasser und 3.8 ml einer 0.8 M Lösung von Tetrabutylammonium-hydroxid in Methanol zusetzen und verschlossen über Nacht rühren. Anschließend die Lösung mit etwa 20 ml Dihexylether versetzen und die Alkohole am Rotationsverdampfer bei etwa 30 °C Badtemperatur abdestillieren.

3.528 g (9.5 mMol) LaCl₃ · 7 H₂O und 183 mg (0.5 mmol) EuCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren 16.6 ml (38 mmol) Trioctylamin und obige Arsenat-Lösung dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren. Falls erwünscht, kann das Rohprodukt durch Waschen mit kleinen Mengen Ethanol, durch Diafiltration oder andere übliche Verfahren von den Nebenprodukten befreit werden.

### 10. LaAsO₄:Eu Nanopartikel:

3.528 g (9.5 mMol) LaCl₃ · 7 H₂O und 183 mg (0.5 mmol) EuCl₃ · 6 H₂O in wenig Methanol auflösen und 3.3 ml (12 mmol) Tributylphosphat und 40 ml Dihexylether dazugeben. Unter

Vakuum das Methanol und freigesetzte Kristallwasser abdestillieren.
Unter Rühren eine Lösung von 3.77 g Na₂HAsO₄ · 7 H₂O (12 mmol) in 40 ml Tris[2-(2-methoyethoxy)ethyl]amin (einem Komplexbildner für Na-Ionen) dazugeben. Anschließend unter Stickstoff auf etwa 200 °C heizen und über Nacht bei dieser Temperatur rühren.
Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 11. YPO₄:CE Nanopartikel:

2.88 g (9.5 mMol) YC1, 6 H₂O und 177 mg (0.5 mMol) CeCl₃ 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren eine Lösung von 2.14 g Na₂EPO₄ · 2 H₂O (12 mmol) in 40 ml Tris[2-(2-methoyethoxy)ethyl]amin (einem Komplexbildner für Na-Ionen) dazugeben. Anschließend unter Stickstoff auf etwa 200 °C heizen und über Nacht bei dieser Temperatur rühren.
Anschließend wird die Lösung durch Diafiltration (Porengröße des Filters: 5000 -10000 Dalton) gegen Ethanol in einer Rührzelle gereinigt und die Nanopärtikel durch anschließendes Einengen der diafiltrierten Lösung am Rotationsverdampfer isoliert.

### 12. YPO₄:Dy Nanopartikel :

2;88g (9.5 mMol) YCl₃ · 6 H₂O und 188 mg (0.5 mMol) DyCl₃ · 6 H₂O in wenig Methanol auflösen und 3.3 ml (12 mmol) Triisobutylphosphat und 40 ml Dihexylether dazugeben. Unter Vakuum das Methanol und freigesetzte Kristallwasser abdestillieren.
2.14 g Na₂HPO₄ · 2 H₂O (12 mmol) in einer Mischung aus 10 ml 15-Crown-5 Kronenether (einem Komplexbildner für Na-Ionen) und 20 ml Dihexylether lösen und unter Rühren zur Metallsalzlösung geben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren. Anschließend wirddie Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 13. In₂S₃ Nanopartikel:

2.93 g (10 mMol) InCl₃ · 4 H₂O in wenig Ethanol lösen. 4.6 g (12 mmol) Trioctylphosphanoxid (TOPO) in 40 ml Dioktylether lösen und dazugeben. Unter Vakuum das Methanol und freigesetzte Kristallwasser abdestillieren. 667mg NaHS · H₂O (9 mmöl) werden zusammen mit 5 ml 15-Crown-5 Kronenether (einem Komplexbildner für Na-Ionen) in 20 ml Ethylenglykoldibutylether gelöst und unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 14. BaSO₄:Ce Nanopartikel:

3.165 g (9.5 mMol) BaBr₂ · 2 H₂O und 177 mg (0.5 mMol) CeCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
1.66 g NaHSO₄ · H₂O (12 mmol) werden zusammen mit 5 ml 15-Crown-5 Kronenether (einem Komplexbildner für Na-Ionen) in 20 ml Ethylenglykoldibutylether gelöst und unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 15. BaSO₄:Eu Nanopartikel:

3.165 g (9.5 mMol) BaBr₂ · 2 H₂O und 183 mg (0.5 mMol) EuCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
2.05 g Tetrabutylammoniumhydrogensulfat (CH₄CH₂CH₂CH₂)₄NHSO₄ (12 mmol) werden in 20 ml Dihexylether gelöst und zusammen mit 16.6 ml (38 mmol) Trioctylamin unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 16. LaF₃: Ce, Nd Nanopartikel:

1.485 g (4 mMol) LaCl₃ · 7 H₂O, 1.676 g (4.5 mMol) CeCl₃ · 7 H₂O und 538 mg (1.5 mMol) NdCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
645 mg Triethylamin-trishydrofluorid (CH₂CH₂)₄N · 3 HF (4 mmol) werden in 20 ml Dihexylether gelöst und zusammen mit 16.6 ml (38 mmol) Trioctylamin unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 17. LaF₃: Ce, Tb Nanopartikel:

1.96 g (4 mMol) La(CH₃COCHCOCH₃)₃ · 3 H₂O, 2.21 g (4.5 mMol) Ce(CH₃COCHCOCH₃)₃ · 3 H₂O und 765 mg (1.5 mMol) Tb(CH₃COCHCOCH₃)₃ · 3 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
0.5 ml Fluorwasserstoff-Pyridin Komplex (C₅H₅N) · x HF mit ca. 70 Gew.-% HF werden in 20 ml Dihexylether gelöst und unter Rühren zur Lösung der Metallacetylacetonate gegeben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 18 . YF₃: Yb, Er Nanopartikel:

2.10 g (7.9 mMol) Y(CH₃CHOCH₃)₃, 630 mg (1.8 mMol) Yb (CH₃CHOCH₃)₃ und 103 mg (0.3 mMol) Er (CH₃CHOCH₃)₃ in wenig Methanol auflösen und 3.3 ml (12 mmol) Tributylphosphat und 40 ml Dihexylether dazugeben. Unter Vakuum das Methanol und freigesetzte Kristallwasser abdestillieren.
1.1 g Fluorwasserstoff-2,4,6-Trimethylpyridin Komplex (ca. 11-12 mMol HF pro Gramm) werden in 20 ml Dihexylether gelöst und unter Rühren zur Lösung der Metallisopropylate gegeben.
Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 19. LaF₃: Yb, Er Nanopartikel:

2.50 g (7.9 mMol) La(CH₃CHOCH₃)₃, 630 mg (1.8 mMol) Yb(CH₃CHOCH₃)₃ und 103 mg (0.3 mMol) Er(CH₃CHOCH₃)₃ in wenig Methanol auflösen und 3.3 ml (12 mmol) Tributylphosphat und 40 ml Dihexylether dazugeben. Unter Vakuum das Methanol und freigesetzte Kristallwasser abdestillieren.
645 mg Triethylamin-trishydrofluorid (CH₂CH₂)₄N · 3 HF (4 mmol) werden in 20 ml Dihexylether gelöst und unter Rühren zur Lösung der Metallisopropylate gegeben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 20. CeF₃: Nd Nanopartikel:

3.11 g (9.8 mMol) Ce(CH₃CHOCH₃)₃) und 64 mg (0.2 mMol) Nd(CH₃CHOCH₃)₃ in wenig Methanol auflösen und 3.3 ml (12 mmol) Tributylphosphat und 40 ml Diisopentylether dazugeben. Unter Vakuum das Methanol und freigesetzte Kristallwasser abdestillieren.
0.5 ml 48%ige Flußsäure (12 mMol HF) werden in 20 ml Düsopentylether dispergiert und unter Rühren zur Lösung der Metallisopropylate gegeben. Anschließend die Lösung über Nacht unter Stickstoff rückflußkochen.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### Ende der expliziten Herstellungsbeispiele.

Wie aus den obigen Beispielen ersichtlich wird, kann das der vorliegenden Erfindung zugrunde liegende Prinzip sehr breit angewendet werden, um eine Fülle von Stoffen mit jeweils gezielt auswählbaren Eigenschaften herzustellen.

Wird TOP und/ oder TOPO als Lösungsmittel während des Herstellungsverfahren verwendet, so ergeben sich gegenüber den weiter oben erwähnten, prinzipiell sehr gut verwendbaren Phophorsäureestern die Vorteile einer höheren Berstellungstemperatur; etwa um 530 Kelvin und darüber hinaus, einer damit verbundenen besseren Einbindung der Dotierungssubstanz und einer daraus resultierenden hören Intensität des emittierten Lichts, was ein entscheidender Faktor für die Anwendbarkeit eines Fluoreszenzmarkers sein kann. Ausserdem kann bei hohen Synthesetemperaturen auch ein Wirtsgitter erfolgreich dotiert werden, selbst wenn die Atomgröße der Dotanden nur schlecht zur Ionengröße der Wirtsionen paßt. Somit können gezielt fast beliebige Fluoreszenzfarben erzeugt werden.

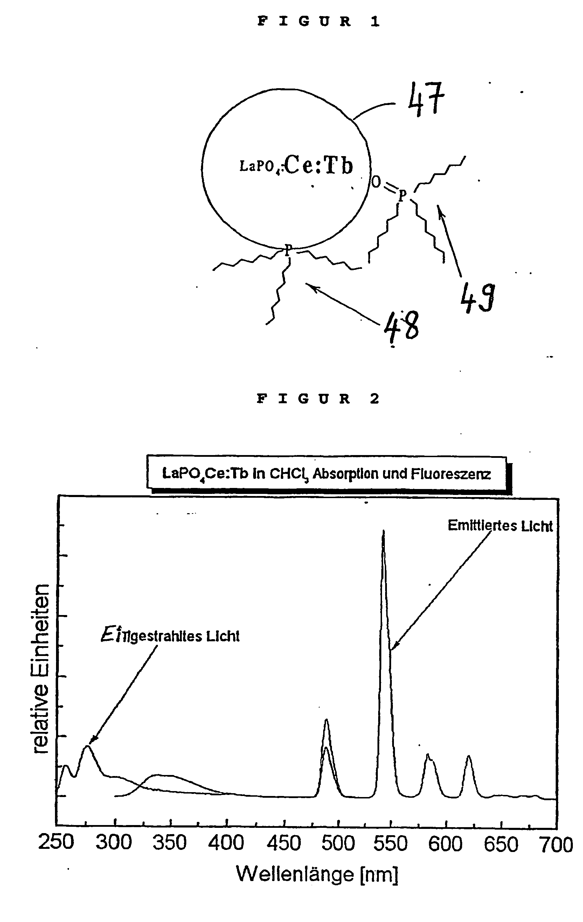

Wie aus Fig. 1 schematisch hervorgeht, ist unmittelbar nach Herstellung die Oberfläche 47 der Nanopartikel von einer Hülle bestehend aus Lösungsmittelresten, insbesondere aus Trioctylphosphin 48, (TOP), und Trioctylphosphinoxid 49, (TOPO) abgekürzt, umgeben, von denen in der Figur nur jeweils eines dargestellt ist. Dies ermöglicht einen vereinfachten Umgang mit den Nanopartikeln im Anschluß an deren Herstellung, da durch diese Oberflächenmoleküle (Lösungsmittelreste) eine verbesserte Löslichkeit in handelsüblichen Lösungsmitteln vermittelt wird, ohne die Teilchen in einem zweiten aufwendigen Schritt chemisch zu verändern.

Die sich aus den oben beschriebenen Schritten des Herstellungsverfahrens ergebende Substanz kann bei Bedarf ebenfalls wie oben beschrieben getrocknet und in einen Feinstaub bis etwa 30 nm durchschnittlicher Korngröße zerbröselt werden.

Erfindungsgemäße, UV- Licht absorbierende Stoffe können zur Abschirmung vor oder Beseitigung von UV-Licht oder als Wandler in sichtbares Licht verwendet werden. Sie können dadurch beispielsweise als Beimengung in Sonnenschutzcremes verwendet werden, oder als Beschichtungsstoff den Wirkungsgrad von Solaranlagen, insbesondere Photovoltaikanlagen erhöhen und die Anlagen vor UV-Licht verursachter vorzeitiger Alterung bewahren.

Ein neuer, vielfältiger Anwendungsbereich für die erfindungsgemäßen Stoffgruppen ergibt sich auch durch die Verwendung von Nanopartikeln enthaltend einen Stoff oder mehrere aus der Familie der Phosphore, insbesondere von Wolframaten, Tantalaten, Gallaten, Aluminaten, Boraten, vanadaten, Sulfoxiden, Silikaten, Halogenidverbindungen zur Lichterzeugung in Geräten oder Leuchtkörpern beliebiger Art, sowie Lampen. Dadurch können standardmäßig LEDs, beliebige Displayvorrichtungen, Bildschirme jeglicher Art vorteilhaft bestückt werden. Der Einsatz dieser 'Phosphoren-Nanopartikel' bietet sich jedoch im Besonderen dann an, wenn die besondere Eigenschaften der Nanopartikel irgendeinen besonderen, für den jeweiligen Anwendungsfall typischen Vorteil bietet. Nur beispielhaft genannt seien grosse, leuchtende, möglicherweise dreidimensional ausgestaltete Flächen oder Leuchtkörper, die dann nur durch Beimischung der Nanopartikel in dünne Folien wirtschaftlich herstellbar sind. In gleicher Weise können dotierte Nanopartikel im allgemeinen Sinne und die speziell nach der vorliegenden Erfindung weitergebildeten, anorganisch dotierten Nanopartikel zur Lichterzeugung verwendet werden.

## Patentansprüche

1. Verfahren zur Synthese von Metallsalz-Nanopartikeln, die ein Phosphat, Halophosphat, Arsenat, Sulfat, Borat, Aluminat, Gallat, Silikat, Germanat, Oxid, Vanadat, Niobat, Tantalat, Wolframat, Molybdat, Alkalihalogenat, anderes Halogenid, Nitrid, Sulfid, Selenid, Sulfoselenid oder Oxysulfid als Anion enthalten, welches die folgenden Schritte umfasst:
a) das Herstellen einer Synthesemischung, die zumindest umfasst:
aa) als ein organisches Lösungsmittel eine das Kristallwachstum der Nanopartikel steuernde Komponente, die unter phosphororganischen Verbindungen und Aminen ausgewählt wird, und als weitere Komponente eine Etherverbindung oder eine über der Synthesemindesttemperatur siedende Alkanverbindung,
bb) eine in der Synthesemischung lösliche oder zumindest darin dispergierbare Kationenquelle, die unter Metallchloriden, Metallbromiden, Metalliodiden, Metallalkoxiden, Metallacetaten und Metallacetylacetonaten ausgewählt wird, und
cc) eine in der Synthesemischung lösliche oder zumindest darin dispergierbare Quelle für die besagten Anionen, die ausgewählt wird unter:
aaa) freien Säuren der Salze der jeweils herzustellenden Metallsalz-Nanopartikel, oder
bbb) in der Synthesemischung löslichen oder zumindest darin dispergierbaren Salzen, oder
ccc) organische Verbindungen, die ab einer erhöhten Synthesemindesttemperatur Anionen freisetzen, und
b) das Halten der Synthesemischung über einer vorgegebenen Synthesemindesttemperatur zur Bildung der Nanopartikel.

2. Verfahren gemäß Anspruch 1, worin die Aminverbindung unter Monoalkylaminen, insbesondere Dodecylamin, oder Dialkylaminen, insbesondere Bis-(ethylhexyl)-amin ausgewählt wird.

3. Verfahren gemäß Anspruch 1, worin die phosphororganische Verbindung mindestens eine unter den folgenden ist:
a) Phosphinsäureestern der Formel (R₁-) (R₂-) (R₃-O-) P=O,
b) Phosphonsäurediester der Formel (R₁-) (R₂-O-) (R₃-O-) P=O,
c) Phosphorsäuretriester (Trialkylphosphate) der Formel (R₁-O-) (R₂-O-) (R₃-O-) P=O,
d) Trialkylphosphane der Formel (R₁-) (R₂-) (R₃-) P, insbesondere Trioctylphosphan (TOP),
e) Trialkylphosphanoxide der Formel (R₁-) (R₂-) (R₃-) P=O, insbesondere Trioctylphosphanoxid (TOPO),
wobei R1, R2, R3 verzweigte oder unverzweigte Alkanketten mit mindestens einem Kohlenstoffatom, oder Phenyl-, Toloyl-, Xylolyl-, oder Benzylgruppen sind, oder
f) ein Phosphoramid, bevorzugt Tris-(dimethylamino)-phosphan, oder
g) ein Phosphoramidoxid, bevorzugt Tris-(dimethylamino)-phosphanoxid.

4. Verfahren gemäß Anspruch 3, wobei R1, R2, oder R3 verzweigte oder unverzweigte Alkanketten sind, die wenigstens eine Carboxylgruppe (-COOH), Carbonsäureestergruppe (-COOR), Aminogruppen (-NH₂) und (-NHR), Hydroxylgruppe (-OH), Cyanogruppe (-CN), Mercaptogruppe (-SH), Brom (-Br) und Chlor (-Cl) oder Kombinationen aus diesen Gruppen tragen.

5. Verfahren gemäß Anspruch 3, worin die phosphororganische Verbindung ein Trialkylphosphat oder ein Trialkylphosphan ist und in einer Menge von weniger als 10 Mol, bevorzugt 0,9 bis 5 Mol, und besonders bevorzugt 0,95 bis 2 Mol, jeweils pro Mol Metallionen, verwendet wird.

6. Verfahren gemäß Anspruch 1, worin die Etherverbindung unter Dipentylether, Dihexylether, Diheptylether, Dioctylether, Dibenzylether, Diisoamylether, Ethylenglykoldibutylether, Diethylenglykoldibutylether und Diphenylether ausgewählt wird.

7. Verfahren gemäß Anspruch 1, worin die Alkanverbindung Dodekan oder Hexadekan ist.

8. Verfahren nach einem der vorstehenden Ansprüche, den weiteren Schritt enthaltend:
Neutralisieren der Synthesemischung mit einer in der Synthesemischung löslichen Base.

9. Verfahren gemäß Anspruch 8, worin die Base Trihexylamin, Triheptylamin, Trioctylamin, oder Tris-(2-ethylhexyl)amin ist.

10. Verfahren gemäß Anspruch 1, worin die Anionenquelle ein Salz mit organischem Kation oder ein Alkalimetallsalz ist.

11. Verfahren gemäß Anspruch 1, worin die Anionenquelle unter Phosphorsäure, Borsäure oder Flusssäure ausgewählt wird.

12. Verfahren gemäß Anspruch 1, worin die Anionenquelle ein schwer lösliches Salz bb) ist und ein Metallkomplexbildner zur Förderung der Löslichkeit des als Anionenquelle dienenden Metallsalzes zugegeben wird.

13. Verfahren gemäß Anspruch 12, worin der Metallkomplexbildner ein Kronenether für Alkalimetallsalze ist.

14. Nanopartikel, erhältlich nach einem Verfahren, wie es in einem der Ansprüche 1 bis 13 definiert ist.

15. Nanopartikel gemäß Anspruch 14, worin die Nanopartikel Leuchtstoffe, insbesondere fluoreszenzfähige Leuchtstoffe sind.

16. Nanopartikel gemäß Ansprüche 14 oder 15, die mehrere Kationen enthalten, wobei wenigstens ein Metall davon die Nanopartikel dotiert.

17. Nanopartikel gemäß einem der Ansprüche 14 bis 16, wobei als Dotierung ein oder mehrere Elemente aus einer Menge enthaltend Elemente der Hauptgruppen 1a, 2a oder Al, Cr, T1, Mn, Ag, Cu, As, Nb, Ni, Ti, In, Sb, Ga, Si, Pb, Bi, Zn, Co und oder Elemente der Lanthaniden verwendet werden.

18. Nanopartikel gemäß Anspruch 17, wobei das Wirtsgitter eine Lanthan- oder Lanthanidenverbindung, insbesondere LaPO₄, enthält, und wobei Dotanden aus der Gruppe der Lanthaniden enthalten sind.

19. Nanopartikel gemäß Anspruch 17 oder 18, wobei als Dotierung zwei Elemente, insbesondere Cer und Terbium in unterschiedlichen relativen Konzentrationen zueinander verwendet werden, wobei das eine Dotierelement ein lokales Maximum des Absorptionsspektrums für Licht, bevorzugt UV-Licht besitzt, und das andere Dotierelement ein Fluoreszenzemissionsspektrum hat, das mindestens ein lokales Maximum aufweist, das einen Abstand Δλ/λ vom Absorptionsmaximum des ersten Dotierelements von wenigstens 4%, bevorzugt von mehr als 20% aufweist.

20. Nanopartikel gemäß Anspruch 19, wobei als Dotierung Cer und Terbium, und als Wirtsmaterial LaPO₄ verwendet werden.

21. Nanopartikel gemäß mindestens einem der Ansprüche 14 bis 16, worin die Nanopartikel unter den folgenden Verbindungen ausgewählt werden:
LiI:Eu; NaI:Tl; CsI:Tl; CsI:Na; LiF:Mg; LiF:Mg,Ti; LiF:Mg,Na; KMgF₃:Mn; Al₂O₃:Eu; BaFCl:Eu; BaFCl:Sm; BaFBr:Eu; BaFCl_{0.5}Br_{0,5}:Sm; BaY₂F₈:A (A= Pr, Tm, Er, Ce); BaSi₂O₅:Pb; BaMg₂Al₁₆O₂₇ : Eu; BaMgAl₁₄O₂₃:Eu; BaMgAl₁₀O₁₇:Eu; (Ba, Mg)Al₂O₄:EU; Ba₂P₂O₇:Ti; (Ba, Zn, Mg)₃Si₂O₇:Pb; Ce(Mg, Ba) Al₁₁O₁₉; Ceo_{0.65}Tb_{0.35}MgAl₁₁O₁₉; MgAl₁₁O₁₉:Ce,Tb; MgF₂ : Mn; MgS : Eu; MgS:Ce; MgS:Sm; MgS(Sm, Ce); (Mg, Ca)S:Eu; MgSiO₃:Mn; 3,5MgO.0,5MgF₂.GeO₂:Mn; MgWO₄:Sm; MgWO₄:Pb; 6MgO.As₂O₅:Mn; (Zn, Mg)F₂:Mn; (Zn, Be)SO₄:Mn; Zn₂SiO₄:Mn; Zn₂SiO₄:Mn,As; ZnO:Zn; ZnO : Zn, Si , Ga; Zn₃(PO₄)₂:Mn; CdBO₄:Mn; CaF₂:Mn; CaF₂:Dy; CaS:A (A=Lanthanide, Bi) ; (Ca, Sr) S : Bi; CaWOa : Pb; CaWOa : Sm; CaSO₄:A (A= Mn, Lanthanide) ; 3Ca₃(PO₄)₂.Ca(F, Cl)₂:Sb, Mn; CaSiO₃:Mn, Pb; Ca₂Al₂Si₂O₂:Ce; (Ca, Mg)SiO₃:Ce; (Ca, Mg)SiO₃:Ti; 2SrO.6 (B₂O₃) .SrF₂:Eu; 3Sr₃(PO₄)₂.CaCl₂:Eu; A₃(PO₄)₂.ACl₂:Eu (A=Sr, Ca, Ba); (Sr,Mg)₂P₂O₇:Eu; (Sr, Mg)₃(PO₄)₂:Sn; SrS:Ce; SrS:Sm,Ce; SrS:Sm; SrS:Eu; SrS:Eu,Sm; SrS:Cu,Ag; Sr₂P₂O₇:Sn; Sr₂P₂O₇:Eu; Sr₄Al₁₄O₂₅:Eu; SrGa₂S₄:A (A=Lanthanide, Pb); SrGa₂S₄:Pb; Sr₃Gd₂Si₆O₁₈:Pb, Mn; YF₃:Yb,Er; YF₃:Ln (Ln=Lanthanide); YLiF₄:Ln (Ln=Lanthanide); Y₃Al₅O₁₂:Ln (Ln=Lanthanide); YAl₃(BO₄)₃:Nd,Yb; (Y,Ga)BO₃:Eu; (Y,Gd)BO₃:Eu; Y₂Al₃Ga₂O₁₂:Tb; Y₂SiO₅:Ln (Ln=Lanthanide); Y₂O₃:Ln (Ln=Lanthanide); Y₂O₂S:Ln (Ln=Lanthanide); YVO₄:A (A=Lanthanide, In); Y(P,V)O₄:Eu; YTaO₄:Nb; YAlO₃:A (A= Pr, Tm, Er, Ce); YOCl:Yb,Er; LnPO₄:Ce,Tb (Ln=Lanthanide oder Mischungen von Lanthaniden) ; LuVO₄:Eu; GdVO₄ : Eu; Gd₂O₂S:Tb; GdMgB₅O₁₀:Ce,Tb; LaOBrTb; La₂O₂S:Tb; LaF₃:Nd,Ce; BaYb₂F₈:Eu; NaYF₄:Yb,Er; NaGdF₄:Yb,Er; NaLaF₄:Yb,Er; LaF₃:Yb,Er,Tm; BaYF₅:Yb,Er; Ga₂O₃:Dy; GaN:A (A= Pr, Eu, Er, Tm); Bi₄Ge₃O₁₂; LiNbO₃:Nd,Yb; LiNbO₃:Er; LiCaAlF₆:Ce; LiSrAlF₆:Ce; LiLuF₄:A (A= Pr, Tm, Er, Ce) ; Gd₃Ga₅O₁₂:Tb; Gd₃Ga₅O₁₂:Eu; Li₂B₄O₇:Mn,SiOx:Er,Al (0<x<2).

22. Nanopartikel gemäß mindestens einem der Ansprüche 14 bis 16, die unter den folgenden Verbindungen ausgewählt werden: YVO₄:Eu; YVO₄:Sm; YVO₄:Dy; LaPO₄ : Eu; LaPO₄ : Ce ; LaPO₄:Ce,Tb; Y₂O₃:Eu; Y₂O₂S:Eu; Y₂SiO₅:Eu; SiO₂:Dy; SiO₂:Al; Y₂O₃:Tb; Ca₃(PO₄)₂:Eu²⁺; Ca₃(PO₄)₂:Eu²⁺, Mn²⁺; Sr₂SiO₄:Eu⁺²; oder BaAl₂O₄:Eu²⁺.

23. Nanopartikel gemäß mindestens einem der Ansprüche 14 bis 16, die unter den folgenden Verbindung ausgewählt werden: MgF₂:Mn; CaSiO₃:A; CaS:A; CaO:A; ZnS:A; Y₂O₃:A oder MgF₂:A (A = Lanthaniden).

24. Nanopartikel gemäß einem der Ansprüche 14 bis 23, worin die Nanopartikel eine Größe von 1 bis 8 nm, bevorzugt 4 bis 5 nm aufweisen, bei einer Standardabweichung von weniger als 30%, bevorzugt weniger als 10%.

25. Nanopartikel gemäß Anspruch 14, worin die Nanopartikel unter Phosphaten der Seltenerdmetalle, Phosphaten der III. Hauptgruppe, oder Phosphate von Calcium (Ca), Strontium (Sr), oder Barium (Ba) ausgewählt werden und die Nanopartikel eine Ausdehnung aufweisen von maximal 15 nm, bevorzugt maximal 10 nm, längs ihrer längsten Achse, und am meisten bevorzugt 4 bis 5 nm mit einer Standardabweichung geringer als 30 %, bevorzugt jeweils geringer als 10%.

26. Flüssigkeit, Aerosol oder Gas, welches die Nanopartikel gemäß einem der Ansprüche 14 bis 25 enthält.

27. Flüssigkeit gemäß Anspruch 26, die ein Trägerlack oder eine Trägerfarbe ist.

28. Polymer enthaltend die Nanopartikel gemäß einem der Ansprüche 14 bis 25.

29. Polymer gemäß Anspruch 28, das in Form einer Folie vorliegt, insbesondere aus Polyethylen oder Polypropylen, worin die Nanopartikel eingebettet sind.

30. Verwendung von Nanopartikeln gemäß einem der Ansprüche 15 bis 22 enthaltend einen Stoff oder mehrere aus der Familie der Phosphore, insbesondere Wolframate, Tantalate, Borate, Vanadate, Sulfoxide, Silikate, Gallate, Aluminate, oder Halogenidverbindungen zur Markierung von Gegenständen, Flüssigkeiten oder Gasen.

31. Verwendung von Nanopartikeln gemäß einem der Ansprüche 15 bis 22 enthaltend einen Stoff oder mehrere aus der Familie der Phosphore, insbesondere Wolframate, Tantalate, Borate, Vanadate, Sulfoxide, Silikate, Gallate, Aluminate, oder Halogenidverbindungen zur Lichterzeugung in Geräten oder Leuchtkörpern.

## Claims

1. Process for the synthesis of metal salt nanoparticles, which contain a phosphate, halophosphate, arsenate, sulphate, borate, aluminate, gallate, silicate, germanate, oxide, vanadate, niobate, tantalate, tungstate, molybdate, alkali metal halogenate, other halogenide, nitride, sulphide, selenide, sulphoselenide or oxysulphide as anion, which comprises the following steps:
a) the production of a synthesis mixture which comprises at least:
aa) as an organic solvent, a component which controls the crystal growth of the nanoparticles, which is selected from phosphororganic compounds and amines, and as a further component, an ether compound or an alkane compound which boils above the minimum synthesis temperature,
bb) a cation source which is soluble in the synthesis mixture or which can at least be dispersed therein, which is selected from metal chlorides, metal bromides, metal iodides, metal alkoxides, metal acetates and metal acetyl acetonates, and
cc) a source for the said anions which is soluble in the synthesis mixture or which can at least be dispersed therein, which is selected from:
aaa) free acids of the salts of the particular metal salt nanoparticles to be produced, or
bbb) salts which are soluble in the synthesis mixture or which can at least be dispersed therein, or
ccc) organic compounds which release anions from an elevated
minimum synthesis temperature, and
b) keeping the synthesis mixture above a preset minimum synthesis temperature to form the nanoparticles.

2. Process according to claim 1, wherein the amine compound is selected from monoalkylamines, in particular dodecylamine, or dialkylamines, in particular bis-(ethylhexyl)-amine.

3. Process according to claim 1, wherein the phosphororganic compound is at least one of the following:
a) phosphinic acid esters of the formula (R₁-)(R₂-)(R₃-O-)P=O,
b) phosphonic acid diesters of the formula (R₁-)(R₂-O-)(R₃-O-)P=O,
c) phosphoric acid triesters (trialkyl phosphates) of the formula (R₁-O)(R₂-O-)(R₃-O-)P=O
d) trialkyl phosphanes of the formula (R₁-)(R₂-)(R₃-)P, in particular trioctyl phosphane (TOP),
e) trialkyl phosphane oxides of the formula (R₁-)(R₂-)(R₃)P=O, in particular trioctyl phosphane oxide (TOPO),
wherein R1, R2, R3 are branched or unbranched alkane chains having at least one carbon atom, or phenyl, toloyl, xylolyl, or benzyl groups, or
f) a phosphoramide, preferably tris-(dimethylamino)-phosphane, or
g) a phosphoramide oxide, preferably tris-(dimethylamino)-phosphane oxide.

4. Process according to claim 3, wherein R1, R2, or R3 are branched or unbranched alkane chains, which carry at least one carboxyl group (-COOH), carboxylic acid ester group (-COOR), amino groups (-NH₂) and (-NHR), hydroxyl group (-OH), cyano group (-CN), mercapto group (-SH), bromine (-Br) and chlorine (-Cl) or combinations of these groups.

5. Process according to claim 3, wherein the phosphororganic compound is a trialkyl phosphate or a trialkyl phosphane and is used in a quantity of less than 10 moles, preferably 0.9 to 5 moles, and particularly preferably 0.95 to 2 moles, in each case per mole of metal ions.

6. Process according to claim 1, wherein the ether compound is selected from dipentyl ether, dihexyl ether, diheptyl ether, dioctyl ether, dibenzyl ether, diisoamyl ether, ethylene glycol dibutyl ether, diethylene glycol dibutyl ether and diphenyl ether.

7. Process according to claim 1, wherein the alkane compound is dodecane or hexadecane.

8. Process according to one of the above claims, containing the further step:
neutralisation of the synthesis mixture using a base which is soluble in the synthesis mixture.

9. Process according to claim 8, wherein the base is trihexylamine, triheptylamine, trioctylamine, or tris-(2-ethylhexyl)amine.

10. Process according to claim 1, wherein the anion source is a salt with organic cation or an alkali metal salt.

11. Process according to claim 1, wherein the anion source is selected from phosphoric acid, boric acid or hydrofluoric acid.

12. Process according to claim 1, wherein the anion source is a salt bb) which is difficult to dissolve and a metal complex former is added to promote the solubility of the metal salt serving as anion source.

13. Process according to claim 12, wherein the metal complex former is a crown ether for alkali metal salts.

14. Nanoparticles which can be obtained by a process as defined in one of claims 1 to 13.

15. Nanoparticles according to claim 14, wherein the nanoparticles are illuminants, in particular illuminants which are capable of fluorescence.

16. Nanoparticles according to claims 14 or 15, which contain several cations, wherein at least one metal thereof dopes the nanoparticles.

17. Nanoparticles according to one of claims 14 to 16, wherein one or more elements of a quantity containing elements of the main groups 1a, 2a or Al, Cr, Tl, Mn, Ag, Cu, As, Nb, Ni, Ti, In, Sb, Ga, Si, Pb, Bi, Zn, Co and or elements of the lanthanides are used as doping agent.

18. Nanoparticles according to claim 17, wherein the host lattice contains a lanthanum or lanthanide compound, in particular LaPO₄, and wherein doping agents from the group comprising lanthanides are present.

19. Nanoparticles according to claim 17 or 18, wherein two elements, in particular cerium and terbium, are used in different relative concentrations to one another as doping agent, wherein the one doping element has a local maximum of the absorption spectrum for light, preferably UV light, and the other doping element has a fluorescence emission spectrum which has at least one local maximum, which has a distance Δλ/λ from the absorption maximum of the first doping element of at least 4%, preferably of more than 20%.

20. Nanoparticles according to claim 19, wherein cerium and terbium are used as doping agent, and LaPO₄ is used as host material.

21. Nanoparticles according to at least one of claims 14 to 16, wherein the nanoparticles are selected from the following compounds:
LiI:Eu; NaI:Tl; CsI:Tl; CsI:Na; LiF:Mg; LiF:Mg,Ti; LiF:Mg,Na; KMgF₃:Mn; Al₂O₃:Eu; BaFCl:Eu; BaFCl:Sm; BaFBr:Eu; BaFCl_{0.5}Br_{0.5}:Sm; BaY₂F₈:A (A = Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; (Ba, Mg)Al₂O₄:Eu; Ba₂P₂O₇:Ti; (Ba, Zn, Mg)₃Si₂O₇:Pb; Ce(Mg, Ba)Al₁₁O₁₉; Ce_{0.65}Tb_{0.35}MgAl₁₁O₁₉; MgAl₁₁O₁₃:Ce, Tb; MgF₂:Mn; MgS:Eu; MgS:Ce; MgS:Sm; MgS(Sm, Ce); (Mg, Ca)S:Eu; MgSiO₃:Mn; 3.5MgO.0.5MgF₂.GeO₂:Mn; MgWO₄:Sm; MgWO₄:Pb; 6MgO.As₂O₅:Mn; (Zn, Mg)F₂:Mn; (Zn, Be)SO₄:Mn; Zn₂SiO₄:Mn; Zn₂SiO₄:Mn, As; ZnO:Zn; . ZnO:Zn,Si,Ga; Zn₃(PO₄)₂:Mn; CdBO₄:Mn; CaF₂:Mn; CaF₂:Dy; CaS:A (A = lanthanide, Bi); (Ca, Sr)S:Bi; CaWO₄:Pb; CaWO₄:Sm; CaSO₄:A (A = Mn, lanthanide); 3Ca₃(PO₄)₂.Ca(F, Cl)₂: Sb, Mn; CaSiO₃:Mn, Pb; Ca₂Al₂Si₂O₇:Ce; (Ca, Mg)SiO₃:Ce; (Ca, Mg)SiO₃:Ti; 2SrO.6(B₂O₃).SrF₂:Eu; 3Sr₃(PO₄)₂.CaCl₂:Eu; A₃(PO₄)₂.ACl₂:Eu (A = Sr, Ca, Ba); (Sr, Mg)₂P₂O₇:Eu; (Sr, Mg)₃(PO₄)₂:Sn; SrS:Ce; SrS:Sm, Ce; SrS:Sm; SrS:Eu; SrS:Eu, Sm; SrS:Cu, Ag; Sr₂P₂O₇:Sn; Sr₂P₂O₇:Eu; Sr₄Al₁₄O₂₅:Eu; SrGa₂S₄:A (A = lanthanide, Pb); SrGa₂S₄:Pb; Sr₃Gd₂Si₆O₁₈:Pb, Mn; YF₃:Yb,Er: YF₃:Ln (Ln = lanthanide); YLiF₄:Ln (Ln = lanthanide); Y₃Al₅O₁₂:Ln (Ln = lanthanide); YAl₃(BO₄)₃:Nd, Yb; (Y, Ga)BO₃:Eu; (Y, Gd)BO₃:Eu; Y₂Al₃Ga₂O₁₂:Tb; Y₂SiO₅:Ln (Ln = lanthanide); Y₂O₃:Ln (Ln = lanthanide); Y₂O₂S:Ln (Ln = lanthanide); YVO₄:A (A = lanthanide, In); Y(P, V)O₄:Eu; YTaO₄:Nb; YAlO₃:A (A = Pr, Tm, Er, Ce); YOCl:Yb, Er; LnPO₄:Ce, Tb (Ln = lanthanide of mixtures of lanthanides); LuVO₄:Eu; GdVO₄:Eu; Gd₂O₂S:Tb; GdMgB₅O₁₀:Ce, Tb; LaOBrTb; La₂O₂S:Tb; LaF₃:Nd,Ce; BaYb₂F₈:Eu; NaYF₄:Yb,Er; NaGdF₄:Yb,Er; NaLaF₄:Yb,Er; LaF₃:Yb,Er,Tm; BaYF₅:Yb,Er; Ga₂O₃:Dy; GaN:A (A = Pr, Eu, Er, Tm); Bi₄Ge₃O₁₂; LiNbO₃:Nd,Yb; LiNbO₃:Er; LiCaAlF₆:Ce; LiSrAlF₆:Ce; LiLuF₄:A (A = Pr, Tm, Er, Ce); Gd₃Ga₅O₁₂:Tb; Gd₃Ga₅O₁₂:Eu; Li₂B₄O₇:Mn,SiOₓ:Er, Al (0<x<2).

22. Nanoparticles according to at least one of claims 14 to 16, which are selected from the following compounds:
YVO₄:Eu; YVO₄:Sm; YVO₄:Dy; LaPO₄:Eu; LaPO₄:Ce; LaPO₄:Ce,Tb; Y₂O₃:Eu; Y₂O₂S:Eu; Y₂SiO₅:Eu; SiO₂:Dy; SiO₂:Al; Y₂O₃:Tb; Ca₃(PO₄)₂:Eu²⁺; Ca₃(PO₄)₂:Eu²⁺, Mn²⁺; Sr₂SiO₄:Eu²⁺; or BaAl₂O₄:Eu²⁺.

23. Nanoparticles according to at least one of claims 14 to 16, which are selected from the following compound:
MgF₂:Mn; CaSiO₃:A; CaS:A; CaO:A; ZnS:A;Y₂O₃:A or MgF₂:A (A = lanthanides).

24. Nanoparticles according to one of claims 14 to 23, wherein the nanoparticles have a size from 1 to 8 nm, preferably 4 to 5 nm, at a standard deviation of less than 30%, preferably less than 10%.

25. Nanoparticles according to claim 14, wherein the nanoparticles are selected from phosphates of the rare earth metals, phosphates of the IIIrd main group, or phosphates of calcium (Ca), strontium (Sr), or barium (Ba) and the nanoparticles have an expansion of 15 nm maximum, preferably 10 nm maximum, along their longest axis, and in most cases preferably 4 to 5 nm with a standard deviation less than 30%, preferably in each case less than 10%.

26. Liquid, aerosol or gas, which contains the nanoparticles according to one of claims 14 to 25.

27. Liquid according to claim 26, which is a carrier lacquer or a carrier paint.

28. Polymer containing the nanoparticles according to one of claims 14 to 25.

29. Polymer according to claim 28, which is present in the form of a film, in particular made from polyethylene or polypropylene, in which the nanoparticles are embedded.

30. Use of nanoparticles according to one of claims 15 to 22 containing one material or several from the family of phosphors, in particular tungstates, tantalates, borates, vanadates, sulphoxides, silicates, gallates, aluminates, or halogenide compounds for labelling objects, liquids or gases.

31. Use of nanoparticles according to one of claims 15 to 22 containing one material or several from the family of phosphors, in particular tungstates, tantalates, borates, vanadates, sulphoxides, silicates, gallates, aluminates, or halogenide compounds for light production in devices or illuminators.

## Revendications

1. Procédé de synthèse de nanoparticules de sels métalliques, contenant un phosphate, halophosphate, arséniate, sulfate, borate, aluminate, gallate, silicate, germanate, oxyde, vanadate, niobate, tantalate, tungstata; molybdate, halogénate alcalin, un autre halogénure, nitrure, sulfure, séléniure, sulfoséléniure ou oxysulfure sous forme d'anions,
comprenant les étapes suivantes:
a) la préparation d'un mélange de synthèse comprenant au moins:
aa) à titre de solvant organique, un composant commandant la croissance cristalline des nanoparticules, sélectionné parmi des compositions phosphoro-organiques et des amines et, en tant qu'autre composant, un composé éther ou un composé alcane bouillant à une température supérieure à la température minimale de synthèse.
bb) une source de cations, soluble dans le mélange de synthèse ou y étant au moins dispersible, sélectionnée parmi les chlorures métalliques, bromures métalliques, iodures métalliques, alcoxydes métalliques, acétates métalliques et acétyl-acétonates métalliques, et
cc) une source, soluble dans le mélange de synthèse ou au moins y étant dispersible, pour lesdits anions, sélectionnée parmi:
aaa) des acides libres des sels des nanoparticules de sel métallique chaque fois à préparer, ou
bbb) des sels solubles dans le mélange de synthèse ou au moins y étant dispersibles,
ccc) des composés organiques, qui, à partir d'une température minimale de synthèse augmentée, dégagent des anions, et
b) le maintien du mélange de synthèse au-dessus d'une température minimale de synthèse prédéterminée, pour former les nanoparticules.

2. Procédé selon la revendication 1, dans lequel le composé amine est sélectionnée parmi les monoalkylamines, en particulier dodécylamine ou dialkylamines, en particulier Bis-(éthylhexyl)-amine.

3. Procédé selon la revendication 1, dans lequel le composé phosphoro-organique est au moins l'une parmi les suivantes:
a) Esters d'acide phosphinique, de formule (R₁-) (R₂-) (R₃-O-) P=O,
b) Diesters d'acide phosphonique, de formule (R₁-) (R₂-O-) (R₃-O-)P-O,
c) Triesters d'acide phosphorique (trialkylphosphate), de formule (R₁-O-) (R₂-O-) (R₃-O-) P=0,
d) Trialkylphosphane de formule (R₁-) (R₂-) (R₃-) P, en particulier trioctylphosphane (TOP),
e) Trialkylphosphanoxyde de formule (R₂-) (R₁-) (R₃-) P=O, en particulier trioctylphosphanoxyde (TOPO),
dans lesquelles R1, R2, R3 sont des chaînes alcanes, ramifiées ou non ramifiées, ayant au moins un atome de carbone, ou des groupes phényle, toloyle, xylolyle ou benzyle, ou
f) Un phoephoramide, de préférence tria-(dim6thylamino)-phosphane, ou
g) Un phosphoramidoxyde, de préférence tris-(diméthylamino)-phosphanoxyde.

4. Procédé selon la revendication 3, sachant que R1, R2 ou R3 sont des chaînes alcanes ramifiées ou non ramifiées, portant au moins un groupe carboxyle (-COOH), un groupe d'estera d'acide carboxylique (-COOR), des groupes amino (-NH₂) et (-NHR), un groupe hydroxyle (-OH), un groupe cyano (-CN), un groupe mercapto (-SH), du brome (-Br) et du chlore (-Cl) ou des combinaisons de ces groupes.

5. Procédé selon la revendication 3, dans lequel le composé phosphore organique est un trialkyl phosphate ou un trialkyl phosphane et est utilisé en une quantité inférieure à 10 moles, de préférence de 0,9 à 5 moles et, en particulier, de préférence de 0,95 à 2 moles, chaque fois par mole d'ions métalliques.

6. Procédé selon la revendication 1, le composé éther étant sélectionnée parmi dipentyléther, dihexyléther, diheptyléther, dioctyléther, dibenzyléther, diisoamyléther, éthylèneglycoldibutyléther, diéthylènoglycoldibutyléther et diphényléther.

7. Procédé selon la revendication 1, dans lequel le composé alcane est le dodécane ou l'hexadécane.

8. Procédé selon l'une des revendications précédentes contenant l'étape supplémentaire :
neutralisation du mélange de synthèse, avec une base soluble dans le mélange de synthèse.

9. Procédé selon la revendication 8, dans lequel la base est la trihexylamine, triheptylamine, trioctylamine, ou la tris-(2-éthylhexyl)amine.

10. Procédé selon la revendication 1, dans lequel la source d'anions est un sel ayant un cation organique ou un sel de métal alcalin.

11. Procédé selon la revendication 1, dans lequel la source d'anions est sélectionnée parmi l'acide phosphorique, l'acide borique ou l'acide fluorhydrique.

12. Procédé selon la revendication 1, dans lequel la source d'anions est un sel bb) difficilement soluble, et un, agent complexant métallique est ajouté pour favoriser la solubilité du sel métallique servant de source d'anions.

13. Procédé selon la revendication 12, dans lequel l'agent complexant métallique est un éther de couronne pour des sels de métal alcalin.

14. Nanoparticule, susceptible d'être obtenue selon un procédé tel que défini à l'une des revendications 1 à 13.

15. Nanoparticules selon la revendication 14, les nanoparticules étant des substances luminescentes, en particulier des substances luminescentes susceptibles de fluroescence.

16. Nanoparticules selon la revendication 14 ou 15, contenant plusieurs cations, au moins un métal de ceux-ci dopant les nanoparticules.

17. Nanoparticules selon l'une des revendications 14 à 16, où, en tant que dopage étant utilisés un ou plusieurs éléments issus d'un ensemble contenant des éléments des groupes principaux 1a, 2a ou Al, Cr, Tl, Mn, Ag, Cu, As, Nb, Ni, Ti, In, Sb, Ga, Si, Pb, Bi, Zn, Co et/ou des éléments des lanthanides.

18. Nanoparticules selon la revendication 17, le réseau hôte contenant un composé lanthane ou lanthanide, en particulier LaPO₄, et étant contenus des dopants issus du groupe des lanthanides.

19. Nanoparticules selon la revendication 17 ou 18, sachant que, en tant que dopage, sont utilisée deux éléments, en particulier le cérium et le terbium, en des concentrations relatives mutuellement différentes, sachant qu'un élément de dopage présente un maximum local du spectre d'absorption pour la lumière, de préférence la lumière UV, et que l'autre élément de dopage présente un spectre d'émission par fluorescence, présentant au moins un maximum local, présentant un écart Δλ/λ vis-à-vis du maximum d'abgorption du premier élément de dopage, d'au moins 4 %, de préférence de plus de 20 %.

20. Nanoparticules selon la revendication 19, le cérium et le terbium étant utilisés comme dopage et LaPO₄ étant utilisé comme matériau hôte.

21. Nanoparticules selon au moins l'une des revendications 14 à 16, les nanopartioules étant sélectionnées parmi les compositions suivantes:
LiI:Eu ; NaI:Tl ; CsI:Tl ; CsI:Na ; LiF:Mg ; LiF:Mg,Ti ; LiF:Mg,Na ; KMgF₃ : Mn ; Al₂O₃ : Eu ; BaFCl :Eu; BaFCl : 5m ; BaFBr:Eu ; BaFCl_{0,5}Br_{0,5}:Sm ; BaY₂F₈ : A (A= Pr, Tm, Er, Ce) ; BaSi₂O₅: Pb ; BaMg₂Al₁₆O₂₇: Eu, BaMgAl₁₄O₂₃: Eu ; BaMgAl₁₀O₁₇,:Eu ; (Ba, Mg)Al₂O₄:Eu ; Ba₂P₂O₇:Ti ; (Ba, Zn, Mg)₃Si₂O₇:Pb Ce(Mg, Ba)Al₁₁O₁₉ ; Ce_{0,65}Tb_{0,35}MgAl₁₁O₁₉ ; MgAl₁₁O₁₉:Ce,Tb ; MgF₂:Mn ; MgS:Eu ; MgS:Ce ; MgS:Sm ; MgS(Sm, Ce) ; (Mg, Ca)S:Eu ; MgSiO₃:Mn ; 3,5MgO.0,5MgF₂.GₑO₂:Mn ; MgWO₄;Sm MgWO₄;Pb; 6MgO.As₂O₅:Mn ; (Zn, Mg)F₂:Mn ; (Zn, Be)SO₄:Mn ; Zn₂SiO4 :Mn ; Zn₂SiO₄:Mn,As ; ZnO:Zn ; ZnO:Zn,Si,Ga ; Zn₃(PO₄)_{2:}Mn; CdBO₄:Mn ; CaF2 :Mn ; CaF₂:Dy; Cas: A (A=Lanthanide, Bi); (Ca, Sr)S: Bi ; CaWO₄:Pb; CaWO₄:Sm, CaSO₄:A (A= Mn, Lanthanide) ; 3Ca₃(PO₄)₂.Ca(F, Cl)₂:Sb, Mn ; CaSiO₃:Mn,Pb ; Ca₂Al₂SiaO₇:Ce (Ca, Mg)siO₃:Ce ; (Ca, Mg)SiO₃:Ti; 2SrO.6(B₂O₃).SrF₂:Eu ; 3Sr₃(PO₄)₂.CaCl₂:Eu ; A₃(PO₄)₂.ACl₂:Eu (A=Sr, Ca, Ba) ; (Sr,Mg)₂P₂O₇:Eu ; (Sr, Mg)₃(PO₄)₂:Sn; SrS:Ce ; SrS:Sm,Ce ; SrS : Sm ; Sre: Eu ; SrS : Eu, Sm ; SrS:Cu, Ag ; Sr₂P₂O₇:Sn ; Sr₂P₂O₇:Eu ; Sr₄Al₁₄O₂₅:Eu ; SrGa₂S₄:A (A=lanthanide, Pb) ; SrGa₂S₄ : Pb ; Sr₃Gd₂Si₆O₁₈:Pb,Mn ; YF₃:Yb, Er ; YF₃:Ln (Ln=lanthanide) ; YLiF₄:Ln (Ln=lanthanide) ; Y₃Al₅O₁₂:Ln (Ln=lanthanide) ; YAl₃(BO₄)₃:Nd,Yb ; (Y,Ga)BO₃:Eu ; (Y,Gd)BO₃:Eu ; Y₂Al₃Ga₂O₁₂:Tb ; Y₂SiO₅:Ln (Ln=lanthanide) ;Y₂O₃ :Ln (Lanthanide) ; Y₂O₂S :Ln (Lanthanide) ; YVO₄:A (A=lanthanide, In) ; Y(P,V)O₄:Eu ; YTaO₄:Nb ; YAlO₃:A (A= Pr, Tm; Er, Ce) ; YOCl:Yb,Er ; LnPO₄:Ce,Tb (Ln=lanthanide ou des mélanges de lanthanide) ; LuVO₄:Eu ; GdVO₄:Eu ; Gd₂O₂S:Tb ; GdMgB₆O₁₀:Ce,Tb ; LaOBrTb ; La₂O₂S:Tb ; LaF₃:Nd,Ce, BaYb₂F₆:Eu ; NaYF₄:Yb, Er ; NaGdF₄:Yb,Er ; NaLaF₄:Yb,Er ; LaF₃:Yb,Er,Tm ; BaYF₅:Yb, Er ; Ga₂O₃:Dy ; GaN:A (A= Pr, Eu, Er, Tm) ; Bi₄Ge₃O₁₂; LiNbO₃;Nd,Yb ; LiNbO₃:Er ; LiCaAlF₆:Ce ; LiSrAlF₆:Ce ; LiLuF₄:A (A= Pr, Tm, Er, Ce) ; Gd₃Ga₅O₁₂:Tb ; Gd₃Ga₅O₁₂:Eu ; Li₂B₄O₇:Mn,SiOₓ:Er,Al (O<x<2).

22. Nanoparticules selon au moins l'une des revendications 14 à 16, sélectionnées parmi les composés suivants: YVO₄:Eu ; YVO₄:Sm ; YVO₄:Dy: LaPO₄:Eu ; LaPO₄:Ce ; LaPO₄:Ce,Tb ; Y₂O₃:Eu ; Y₂O₂S:Eu ; Y₂SiO₅:Eu ; SiO₂:Dy ; SiO₂:Al ; Y₂O₃:Tb ; Ca₃(PO₄)₂:Eu²⁺ ; Ca₃(PO₄)₂:Eu²⁺, Mn²⁺ ; Sr₂SiO₄:Eu²⁺ ; ou BaAl₂O₄:Eu²⁺.

23. Nanoparticules selon au moins l'une des revendications 14 à 16, sélectionnées parmi les composés suivants: MgF₂:Mn ; CaSiO₃:A ; CaS:A ; CaO:A ; ZnS:A ; Y₂O₃:A ou MgF₂:A (A=lanthanide).

24. Nanoparticule selon l'une des revendications 14 à 23, dans laquelle les nanoparticules présentent une taille de 1 à 8 nm, de préférence de 4 à 5 nm, pour un écart-type inférieur à 30 %, de préférence inférieur à 10 %.

25. Nanoparticules selon la revendication 14, les nanoparticules étant sélectionnées parmi des phosphates, des métaux de terres rares, des phosphates du groupe principal III., ou des phosphates de calcium (Ca), strontium (Sr), ou baryum (Ba) et les nanoparticules présentant une étendue maximale de 15 nm, de préférence maximale de 10 nm, le long de leur axe le plus long et le plus préférence de 4 à 5 nm, avec un écart-type inférieur à 30 %, de préférence chaque fois inférieur à 10 %.

26. Liquide, aérosol ou gaz, contenant les nanoparticules selon l'une des revendications 14 à 25.

27. Liquide selon la revendication 26, étant une laque support ou une peinture support.

28. Polymère contenant les nanoparticules selon l'une des revendications 14 à 25.

29. Polymère selon la revendication 28, se présentant sous la forme d'une feuille, en particulier en polyéthylène ou polypropylène, dans laquelle les nanoparticules sont incorporées.

30. Utilisation de nanoparticules selon l'une des revendications 15 à 22, contenant une substance ou plusieurs de la famille des phosphores, en particulier, tungstanates, tantalates, borates, vanadates, sulfoxydes, silicates, gallates, aluminates ou composés halogénures, pour le marquage d'objets, de liquides ou de gaz.

31. Utilisation de nanoparticules selon l'une des revendications 15 à 22, contenant une substance ou plusieurs issues de la famille des phosphores, en particulier tungstanates, tantalates, borates, vanadates, sulfoxydes, silicates, gallates, aluminates ou des composés halogénures, pour la production de lumière dans des appareils ou des corps luminescents.
